Europäisches Patentamt

(19) European Patent Office

Office européen des brevets

(11) **EP 1 481 230 B1**

(12) **EUROPÄISCHE PATENTSCHRIFT**

(45) Veröffentlichungstag und Bekanntmachung des Hinweises auf die Patenterteilung:
**03.08.2005 Patentblatt 2005/31**

(21) Anmeldenummer: **03784001.4**

(22) Anmeldetag: **01.07.2003**

(51) Int Cl.7: **G01K 11/22**, G01K 15/00, G01L 9/00, G01L 25/00, G01B 17/00

(86) Internationale Anmeldenummer:
**PCT/EP2003/007014**

(87) Internationale Veröffentlichungsnummer:
**WO 2004/015383 (19.02.2004 Gazette 2004/08)**

(54) **VERFAHREN UND VORRICHTUNG ZUR SAW-SENSOR-VERMESSUNG UND -KALIBRIERUNG**

METHOD AND DEVICE FOR SAW SENSOR MEASUREMENT AND CALIBRATION

PROCEDE ET DISPOSITIF POUR LE MESURAGE ET LE CALIBRAGE DE CAPTEURS A ONDES ACOUSTIQUES DE SURFACE (SAW)

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(30) Priorität: **24.07.2002 DE 10233636**

(43) Veröffentlichungstag der Anmeldung:
**01.12.2004 Patentblatt 2004/49**

(73) Patentinhaber: **FRAUNHOFER-GESELLSCHAFT ZUR FÖRDERUNG DER ANGEWANDTEN FORSCHUNG E.V.**
**80686 München (DE)**

(72) Erfinder: **BERNHARD, Josef**
**91052 Erlangen (DE)**

(74) Vertreter: **Schoppe, Fritz, Dipl.-Ing. et al**
**Patentanwälte**
**Schoppe, Zimmermann, Stöckeler & Zinkler**
**Postfach 246**
**82043 Pullach bei München (DE)**

(56) Entgegenhaltungen:
**DE-A- 3 833 341     DE-A- 19 752 858**
**US-A- 5 546 184**

## Beschreibung

Die vorliegende Erfindung bezieht sich auf die Vermessung und Kalibrierung von SAW-Sensoren (SAW = surface acoustic wave = akustische Oberflächenwelle), wie sie beispielsweise zur Dehnungs- und/oder Temperaturmessung eingesetzt werden.

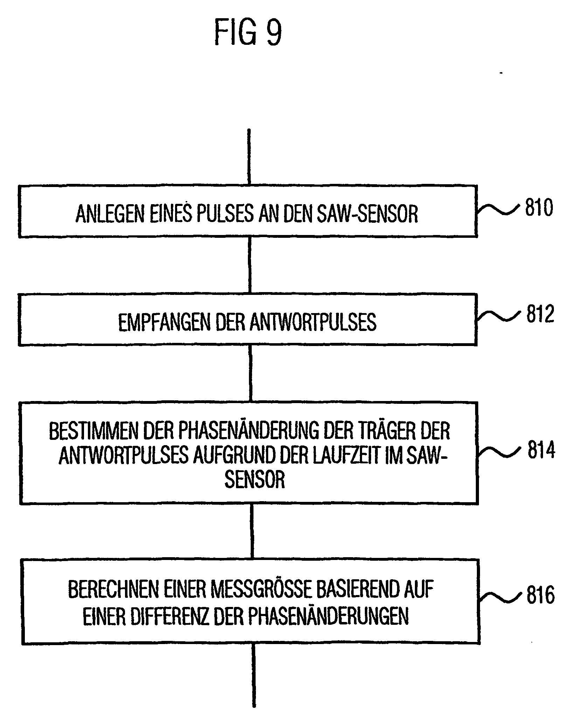

Bei der Dehnungs- und/oder Temperaturmessung mittels SAW-Sensoren wird die hohe Laufzeit des SAW-Substrates ausgenutzt. Anhand der Figuren 9 und 10 wird im folgenden der Aufbau und die Funktionsweise solcher SAW-Sensoren sowie der Messablauf bei solchen Sensoren näher erläutert. In Fig. 10 ist ein SAW-Sensor, der allgemein mit 710 angezeigt ist, schematisch dargestellt. Der SAW-Sensor 710 umfasst ein SAW-Substrat 712 aus einem geeigneten Material, wie z.B. $LiTaO_3$. Das SAW-Substrat 712 ist auf bekannter Weise mit einem Interdigitalwandler (IDT; IDT = Interdigital Transformer) 714 und einer Mehrzahl von Reflektoren 716a, 716b, 716c und 716d versehen, die in vorbestimmten, unterschiedlichen Abständen zu dem Interdigitalwandler 714 auf dem Substrat 712 angeordnet sind und beispielsweise aus Al bestehen.

Zur Dehnungs- und/oder Temperaturmessung wird nun zu Beginn in einem Schritt 810 an den SAW-Sensor 710 ein hochfrequenter Sendepuls angelegt bzw. der SAW-Sensor 710 mit einem hochfrequenten Sendepuls bestrahlt, der eine Trägerfrequenz $f_1$ aufweist. Nach Erzeugung 810 des Oberflächenwellenpulses durchläuft derselbe den SAW-Sensor 710, um zu unterschiedlichen Zeitpunkten an den Reflektoren 716a-716d reflektiert zu werden. Die reflektierten Oberflächenwellenpulse von den Reflektoren 716a-716d werden am Interdigitalwandler 714 in einem Schritt 812 empfangen und dabei in elektrische Antwortpulse umgewandelt.

In einem Graphen 720 sind in Fig. 10 der Sendeimpuls 722 und die reflektierten Antwortpulse 724a, 724b, 724c und 724d in ihrer zeitlichen Beziehung zueinander dargestellt, wie sie an dem Interdigitalwandler 714 anliegen bzw. sich an demselben ergeben. Entlang der x-Achse ist die Zeit t in willkürlichen Einheiten aufgetragen, während entlang der y-Achse lediglich das Vorliegen (ungleich Null) bzw. Nicht-Vorliegen (Null) eines jeweiligen Pulses angezeigt ist, da die Intensitäten der jeweiligen Pulse nicht zur Messgrößenerfassung beitragen. Willkürlich wurde die Mitte des Sendepulses 722 auf den Zeitpunkt t = 0 gelegt. Wie es zu erkennen ist, erreichen die reflektierten Oberflächenwellenpulse den Interdigitalwandler 714 nach Anlegen des Sendepulses 722 aufgrund der unterschiedlichen Abstände der Reflektoren 716a-716d zu dem Interdigitalwandler 714 nach unterschiedlichen Laufzeiten, so dass sich am Interdigitalwandler 714 reflektierte Antwortpulse zu unterschiedlichen Zeitpunkten $t_{Refl1}$, $t_{Refl2}$, $t_{Refl3}$ und $t_{Refl4}$ ergeben. Unter gewissen Standard- bzw. Normalbedingungen, wie z.B. einer vorbestimmten Temperatur und ohne mechanische Belastung des SAW-Substrates 712, ergibt sich beispielsweise zwischen dem ersten und dem letzten Antwortpuls eine Zeitdifferenz $T = T_{Refl4} - T_{Refl1}$, die einer geometrischen Länge zwischen den Reflektoren 716a und 716d entspricht. Eine Änderung dT der Zeitdifferenz T resultiert aus einer Längenänderung, d.h. einer Änderung des Abstandes zwischen den Reflektoren 716a-716d. Längenänderungen werden durch eine mechanische oder thermische Beanspruchung des SAW-Sensors 710 bzw. des SAW-Substrates 712 bewirkt. Unter Ausnutzung des physikalischen Zusammenhangs zwischen relativer Dehnung und der physikalischen Messgröße, wie z.B. der Temperatur, der Kraft entlang der Verbindungsgeraden zwischen Interdigitalwandler 714 und Reflektoren 716a-716d oder dem Druck, kann letztere ermittelt werden.

Die geringen Längenänderungen aufgrund mechanischer oder thermischer Beanspruchung können jedoch nicht direkt über die Messung der Laufzeit, sondern nur indirekt über eine relative Phasenmessung zwischen dem reflektierten Signal und einem Referenzsignal der Frequenz des Sendeimpulses ermittelt werden, wie es nun bezugnehmend auf Fig. 9 und 10 beschrieben wird. In einem Schritt 814 wird die Phasenänderung zumindest des Trägers eines Antwortpulses aufgrund der Laufzeit im SAW-Sensor 710 bestimmt. Zur Veranschaulichung ist in Fig. 10 wiederum in einem Graphen 730 jeweils ein zeitlicher Abschnitt des empfangenen reflektierten Antwortpulses 724a und des empfangenen reflektierten Antwortpulses 724d in relativer Phasenlage zu dem Oszillatorsignal des Referenzoszillators (nicht gezeigt) gezeigt, auf welchem der Träger des Sendeimpulses 722 basiert, wodurch die eigentlich zeitlich auseinanderliegenden Abschnitte der Antwortpulse 724a und 724d im Graphen 730 übereinander liegen. Die x-Achse des Graphen 730 entspricht folglich einer relativen Zeitangabe in willkürlichen Einheiten und die y-Achse der Amplitude in willkürlichen Einheiten, wobei die Amplituden der Signale normiert sind. Das Oszillatorsignal des Referenzoszillators, aus welchem der hochfrequente Träger des Sendepulses 722 erzeugt wurde, läuft nach dem Anlegen 810 bis zum Empfang der Antwortpulse 724a-724d weiter und ist mit einer gestrichelten Linie 732 angezeigt. Der reflektierte Antwortpuls 724a, der in dem Graphen 730 mit 734 angezeigt ist, erreicht den Interdigitalwandler 714 unter einem Phasenversatz $\varphi_1$ bzw. mit einer Phasenänderung $\varphi_1$ relativ zu dem Oszillatorsignal 732. Da die Trägerfrequenz $f_1$ des Sendeimpulses 722 sowie die Trägerfrequenz des empfangenen reflektierten Antwortpulses 724a als fest und gleich angenommen werden können, ergibt sich bei einem thermisch und mechanisch unbelasteten SAW-Sensor 710 eine konstante Phasenlage bzw. -differenz $\varphi_1$ zwischen dem Antwortsignal 724a bzw. 734 eines Reflektors und dem Referenzoszillator in der Ansteuerelektronik des SAW-Sensors. Auf ähnliche Weise liegt, wenn der Antwortpuls 724d den Interdigitalwandler 714 erreicht, zwischen demselben und dem Oszillatorsignal 732 eine Phasendifferenz $\varphi_4$ vor, die bei unbelastetem SAW-Sensor 710 ebenfalls konstant ist, wobei ein Abschnitt des Antwortpuls 724d in relativer Lage zum Referenzoszillatorsignal 732 mit 736 angezeigt ist. Auf ähnliche Weise resultiert jeder reflektierte Puls 724a-d in eine Phasendifferenz zwischen Sendesignal und reflektierter Pulsantwort.

Eine Änderung der Phasendifferenz $\varphi_1$, d.h. $\Delta\varphi_1$, sowie jeder anderen Phasendifferenz bzw. Phasenänderung der anderen Antwortpulse und eine Änderung von Differenzen solcher Phasendifferenzen, wie z.B. $\Delta(\varphi_4-\varphi_1)$ rührt von einer mechanischen oder thermischen Beanspruchung des Sensors 710 her. Unter Ausnutzung von physikalischen Zusammenhängen zwischen relativer Dehnung des SAW-Substrates 712 und der jeweiligen Messgröße wird im Schritt 816 die Messgröße berechnet. Insbesondere hängt eine absolute Längen- bzw. Abstandsänderung des Abstandes zwischen den Reflektoren 716a und 716d, $\Delta d$, wie folgt von einer Änderung der Differenz der Phasenänderungen $\Delta(\varphi_4-\varphi_1) = \Delta\varphi_{14}$ ab:

$$\Delta d = \frac{\Delta\varphi_{14}}{4\pi} \cdot \frac{v_{ph}}{f_1} \qquad\qquad (Gl.\ 1)$$

wobei $v_{ph}$ die Phasengeschwindigkeit des SAW-Sensors ist, die von dem Material des SAW-Substrates 712 abhängt und $f_1$ die Trägerfrequenz anzeigt.

Die relative Dehnung $\varepsilon$ ergibt sich aus der absoluten Längenänderung $\Delta d$ durch

$$\varepsilon = \frac{\Delta d}{d} \qquad\qquad (Gl.\ 2)$$

wobei d den Abstand zwischen Reflektor 716a und 716d in sowohl mechanisch als auch thermisch unbeanspruchtem Zustand anzeigt.

Neben der relativen Dehnung hängen auch verschiedene physikalische Messgrößen von dem Verhältnis aus absoluter Längenänderung zu Länge im Normalzustand, im vorliegenden Beispiel dem Abstand zwischen den Reflektoren 716a und 716d im unbelasteten Zustand, ab. Insbesondere besteht folgender physikalischer Zusammenhang zwischen der relativen Dehnung $\varepsilon = \Delta d/d$ auf der einen und der Temperaturänderung $\Delta T$, der Kraftänderung $\Delta F$ in Oberflächenwellenausbreitungsrichtung und der Druckänderung $\Delta p$ in Oberflächenwellenausbreitungsrichtung auf der anderen Seite:

$$\Delta T = \frac{1}{a} \frac{\Delta d}{d} \qquad\qquad (Gl.\ 3)$$

$$\Delta f = E \cdot A \cdot \frac{\Delta d}{d} \qquad\qquad (Gl.\ 4)$$

$$\Delta p = E \cdot \frac{\Delta d}{d} \qquad\qquad (Gl.\ 5)$$

wobei a der lineare Temperaturkoeffizient des SAW-Substrates 712, A die Querschnittsfläche quer zur Oberflächenwellenausbreitungsrichtung des SAW-Substrates 712 und E das Elastizitätsmodul des SAW-Substrates 712 ist.

Wie es aus den obigen Gleichungen ersichtlich ist, müssen zur Messung relativer Längenänderungen auf dem Sensor 710 zum Ziehen von Rückschlüssen auf mechanische und thermische Beanspruchungen desselben die Absolutlängen bzw. Absolutabstände auf dem SAW-Sensor, wie z.B. im vorhergehenden Beispiel der Abstand zwischen dem Reflektor 716a und dem Reflektor 716d, bekannt sein. Als mögliche Absolutabstände können Abstände zwischen Reflektoren 716a-716d, wie im vorhergehenden Fall, aber auch Abstände zwischen einem Reflektor 716a-716d und dem Interdigitalwandler 714 dienen. Zur Abstandsbestimmung dienen geeignete Punkte, wie z.B. die Mitte des Interdigitalwandlers 714 bzw. die Mitte des jeweiligen Reflektors 716a-716d.

Ein Problem bei der Herstellung von SAW-Sensoren des obigen Typs besteht nun darin, dass Abweichungen der Reflektorpositionen von gewünschten Reflektorpositionen auftreten können. Diese Schwankungen der Absolutabstände verfälschen die Berechnung der Messgrößen, da bei der Berechnung eine Division mit dem Absolutabstand als Divisor durchgeführt wird, wie es Gl. 3-5 zu entnehmen ist. Folglich entstehen hierbei fehlerhafte Sensoren bei Zusammenbau von SAW-Sensor und zugehöriger Auswerteschaltung.

Bisherige Maßnahmen gegen das oben beschriebene Problem bestanden darin, die Fertigungstoleranzen genügend klein zu wählen, um vorbestimmten Messgenauigkeiten zu entsprechen, und damit die Auswerteschaltungen ausreichend genau an die SAW-Sensorabmessungen angepasst sind. Dies erhöht jedoch den Herstellungsaufwand, insbesondere die Herstellungskosten, auf unakzeptable Weise.

EP 1 481 230 B1

Die DE 19913733 A1 bezieht sich auf einen Reifendrucksensor. Die Druckmessung wird über zwei SAW-Sensoren durchgeführt, von denen der eine mit dem zu vermessenden Reifendruck gekoppelt ist und der andere von dem Reifendruck unbeeinflußt ist, um eine Temperaturkompensation durchführen zu können. Die SAW-Sensoren umfassen ein Substrat mit darauf angebrachtem Wandler und reflektierenden Strukturen sowie eine Antenne zur kontaktlosen Übertragung von Antwort- und Abfragesignalen.

Die DE 19752858 A1 beschreibt einen Signalprozessor zur Verarbeitung hochfrequenter CDMA-Signale auf der Basis von akustischen Oberflächenwellen. Zur Eliminierung der Temperaturabhängigkeit des Signalprozessors, sind die Längen zweier SAW-Strecken geeignet an zwei unterschiedliche Kreisfrequenzen $\omega_1$ und $\omega_2$ angepaßt, mit denen die Strecken jeweils betrieben werden.

Die DE 3833341 A1 beschreibt ein Verfahren und eine Vorrichtung zur Messung der Laufzeit von akustischen Wellen. Bei der Messung wird lediglich eine Trägerfrequenz $f_{ofw}$ verwendet, die mit einer Modulationsfrequenz moduliert ist.

Die Aufgabe der vorliegenden Erfindung besteht darin, ein Vermessungs- und Kalibrierungsschema für SAW-Sensoren zu schaffen, welches es ermöglicht, den Herstellungsaufwand für SAW-Sensoren bei gleicher Messgenauigkeit derselben zu verringern und/oder die Messgenauigkeit der SAW-Sensoren oder auf denselben basierenden Vorrichtungen unter verringertem Aufwand zu erhöhen.

Diese Aufgabe wird durch eine Vorrichtung nach Anspruch 1, 13, 15 oder 23, einem Verfahren nach Anspruch 24, 25, 26 oder 27 und einem Computerprogramm nach Anspruch 28 gelöst.

Der vorliegenden Erfindung liegt, die Erkenntnis zugrunde, dass Vermessungen bezüglich SAW-Sensoren, wie z.B. bestimmter Absolutabstände zwischen Reflektor und weiterem Reflektor oder zwischen Reflektor und Interdigitalwandler, und Kalibrierungen von den SAW-Sensoren zugeordneten Einheiten, wie z.B. I/Q-Modulationseinheiten, Auswerteschaltungen und dergleichen, auf einfachere Weise unter Verwendung der Radartechnik bzw. Funktechnik durchgeführt werden können. Im Gegensatz zu anderen möglichen Messverfahren, wie z.B. optischen oder taktilen Messverfahren zur Erfassung von Absolutabständen auf den SAW-Sensoren oder elektrischen Verfahren zur Beseitigung von Nicht-Idealitäten der den SAW-Sensoren zugeordneten elektrischen Einheiten, besteht ein Vorteil der vorliegenden Erfindung darin, dass bestehende Einrichtungen der SAW-Sensoren, wie Erregungs- und Empfangseinrichtung, die beispielsweise in Form eines einzigen Interdigitalwandlers gebildet sind, sowie die denselben zugeordneten Einheiten, wie z.B. die Einrichtung zum Anlegen des Sendepulses bzw. Zeitsignals an den SAW-Sensor, während der Vermessung bzw. Kalibrierung verwendet werden können. Aufgrund dieser Tatsache ist folglich möglich, die vorliegende Erfindung nicht nur als Vermessungs- bzw. Prüfstation bei der Herstellung der SAW-Sensoren bzw. als Vermessungs- bzw. Prüf- oder Kalibrierungsstation beim Zusammenbringen eines SAW-Sensors und einer zugeordneten Auswerteschaltung oder eines I/Q-Demodulators zu verwenden, sondern ferner als ständige Vermessungs- bzw. Prüf- und Kalibrierungseinheit, um beispielsweise thermische Driften in den elektronischen Einheiten, wie z.B. der Auswerteschaltung und dem I/Q-Demodulator, oder dergleichen auszugleichen.

Zur Übertragung der Funktechnik bzw. Radartechnik auf die Vermessung bzw. Kalibrierung bezüglich SAW-Sensoren oder deren zugeordneter elektronischer Einheiten wird gemäß einem ersten Aspekt der vorliegenden Erfindung ein Zeitsignal mit einem Träger einer ersten Frequenz und einem Träger einer zweiten, von der ersten unterschiedlichen, Frequenz an einen SAW-Sensor über eine Erregungseinrichtung desselben angelegt, um durch Bestimmung von Phasenänderungen des Trägers der ersten Frequenz und des Trägers der zweiten Frequenz eines reflektierten Signals aufgrund einer Laufzeit durch das SAW-Substrat Abstandsinformationen über die Reflektoren zu erhalten. Gemäß einem speziellen Ausführungsbeispiel der vorliegenden Erfindung wird durch Anlegen eines Zwei-Ton-Pulses mit zwei unterschiedlichen Trägerfrequenzen aus den Phasenänderungen der Träger der beiden Frequenzen des Zwei-Ton-Antwortpulses der Abstand zwischen dem Reflektor, an dem die jeweilige Reflexion stattfand, und dem gleichzeitig als Erregungs- und Empfangseinrichtung dienenden Interdigitalwandler bestimmt. Der bestimmte Absolutabstand kann daraufhin verwendet werden, um eine dem SAW-Sensor zugeordnete Auswerteschaltung entsprechend einzustellen, derart, dass die Auswerteschaltung eine Messgröße, wie z.B. die Temperatur, die Kraft oder den Druck, basierend auf Phasenmessungen an dem SAW-Sensor unter Verwendung des korrekten Absolutabstandes berechnet.

Gemäß einem weiteren Aspekt der vorliegenden Erfindung werden Nicht-Idealitäten einer dem SAW-Sensor zugeordneten I/Q-Modulationseinheit durch Anlegen eines Zeitsignals mit einem Träger einer ersten Frequenz und einem Träger einer zweiten Frequenz an den SAW-Sensor über die Erregungseinrichtung bestimmt, indem die Frequenzen derart gewählt werden, dass eine aufgrund einer Laufzeit durch den SAW-Sensor bewirkte Phasenänderung eines Trägers der ersten Frequenz eines durch die Empfangseinrichtung des SAW-Sensors empfangenen reflektierten Signals zu einer aufgrund der Laufzeit durch den SAW-Sensor bewirkten Phasenänderung eines Trägers der zweiten Frequenz eine vorbestimmte Phasenbeziehung, wie z.B. eine Phasendifferenz von 90° oder 180°, aufweist, und indem die Nicht-Idealitäten aus den sich ergebenden Inphasen- und Quadraturkomponenten für die beiden Träger bestimmt werden. Auf diese Weise lassen sich ein I/Q-Missverhältnis und Offset in der Inphasenkomponente und der Quadraturkomponente eines I/Q-Demodulators ermitteln und daraufhin beseitigen, bzw. lässt sich der I/Q-Demodulator kali-

4

brieren.

Weitere bevorzugte Ausgestaltungen der vorliegenden Erfindung gehen aus den abhängigen Patentansprüchen hervor.

Bevorzugte Ausführungsbeispiele der vorliegenden Erfindung werden nachfolgend Bezug nehmend auf die beiliegenden Zeichnungen näher erläutert. Es zeigen:

Fig. 1     ein Ablaufdiagramm zur Veranschaulichung eines Ausführungsbeispiels der vorliegenden Erfindung zur Bestimmung von Abstandsinformationen eines SAW-Sensors und anschließenden Einstellung einer demselben zugeordneten Auswerteschaltung;

Fig. 2     eine Skizze zur Veranschaulichung der verwendeten Definition der Abstände bezüglich eines exemplarischen SAW-Sensortyps;

Fig. 3     ein Blockschaltbild einer Vorrichtung zur Bestimmung von Abstandsinformationen eines SAW-Sensors gemäß einem speziellen Ausführungsbeispiel der vorliegenden Erfindung;

Fig. 4     ein Ablaufdiagramm zur Veranschaulichung der Vorgehensweise zur Bestimmung der Nicht-Idealität und Kalibrierung eines einem SAW-Sensor zugeordneten I/Q-Demodulators gemäß einem Ausführungsbeispiel der vorliegenden Erfindung;

Fig. 5a    und 5b Konstellationsdiagramme zur Veranschaulichung möglicher Nicht-Idealitäten eines I/Q-Demodulators;

Fig. 6     ein Konstellationsdiagramm zur Veranschaulichung der Bestimmung des I/Q-Missverhältnisses gemäß der Vorgehensweise von Fig. 4;

Fig. 7     ein Konstellationsdiagramm zur Veranschaulichung der Bestimmung des Offsets der Inphasen- und Quadraturkomponente eines I/Q-Demodulators gemäß der Vorgehensweise von Fig. 4;

Fig. 8     ein Blockschaltbild einer Anordnung zur Bestimmung von Nicht-Idealitäten eines I/Q-Demodulators gemäß einem speziellen Ausführungsbeispiel der vorliegenden Erfindung;

Fig. 9     ein Ablaufdiagramm zur Veranschaulichung eines Meßvorganges eines SAW-Sensors; und

Fig. 10    ein Skizze, in der schematisch der Aufbau eines SAW-Sensors sowie schematisch die Funktionsweise desselben veranschaulicht ist.

Bevor im folgenden anhand der Figuren bevorzugte Ausführungsbeispiele der vorliegenden Erfindung erörtert werden, wird darauf hingewiesen, dass bei der Beschreibung der Figuren gleiche oder funktionsgleiche Elemente mit gleichen bzw. ähnlichen Bezugszeichen versehen werden, und dass eine wiederholte Beschreibung dieser Elemente weggelassen wird.

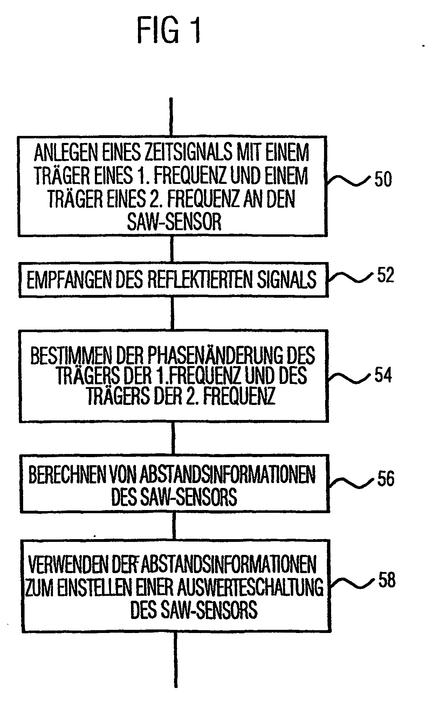

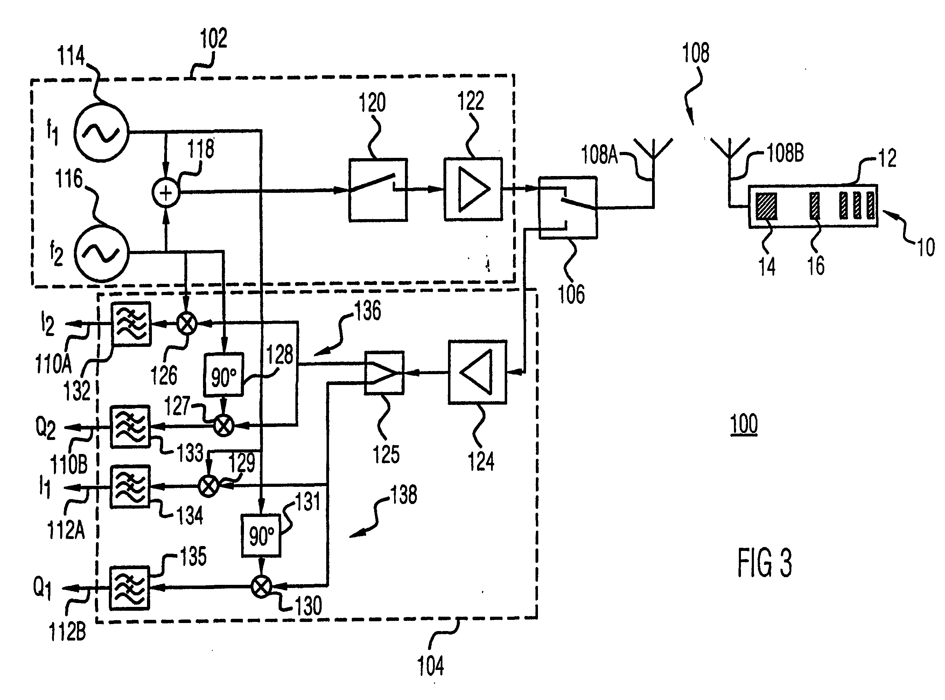

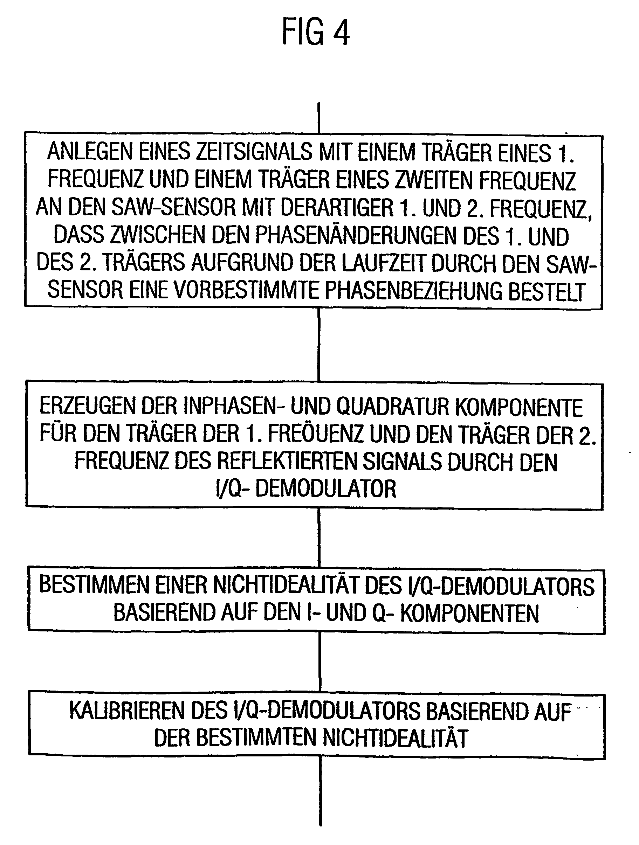

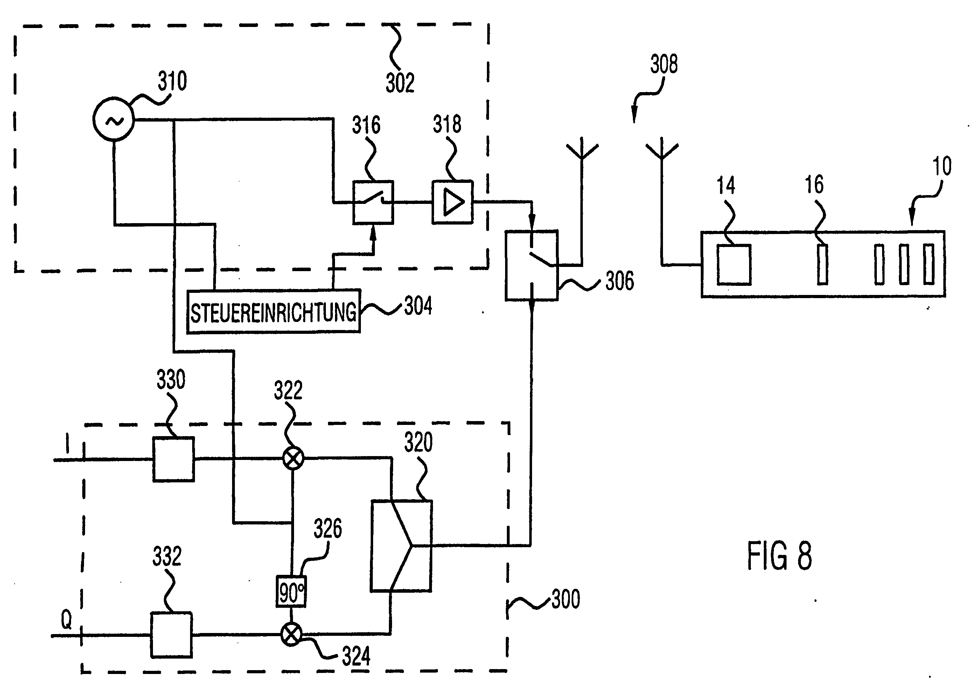

Zudem wird darauf hingewiesen, dass, obwohl in den speziellen Ausführungsbeispielen von Fig. 3 und Fig. 8 die vorliegende Erfindung in Bezug auf SAW-Sensoren beschrieben wird, welche wie in der Beschreibungseinleitung beschrieben aufgebaut sind und betrieben werden, die vorliegende Erfindung auch auf anders aufgebaute SAW-Sensoren anwendbar ist, wie es Bezug nehmend auf Fig. 1 und Fig. 4 erörtert werden wird.

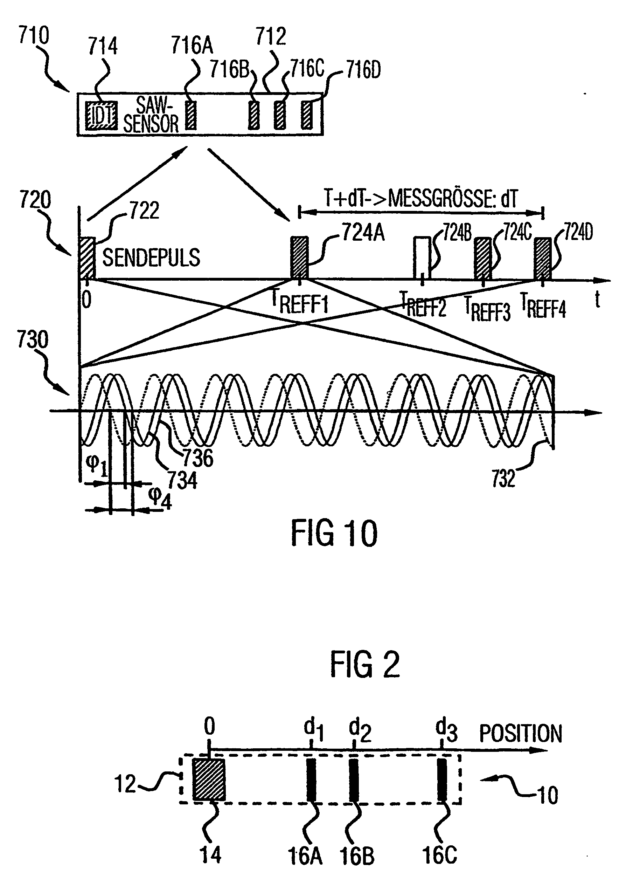

Bezug nehmend auf Fig. 1 wird zunächst ein allgemeines Ausführungsbeispiel für eine Vorgehensweise gemäß der vorliegenden Erfindung beschrieben, nach der Abstandsinformationen eines SAW-Sensors bestimmt werden können und die bestimmten Abstandsinformationen zur Einstellung einer dem SAW-Sensor zugeordneten Auswerteschaltung verwendet werden können. Bei der Beschreibung von Fig. 1 wird hierbei zunächst davon ausgegangen, dass es sich bei dem SAW-Sensor um einen SAW-Sensor des in Fig. 9 und 10 gezeigten und in der Beschreibungseinleitung beschriebenen Typs mit einem Interdigitalwandler und mehreren in vorbestimmten Abständen zu demselben angeordneten Reflektoren handelt. In Fig. 2 ist skizzenhaft die relative Lage eines Interdigitalwandlers 14 als elektroakustischer Wandler und dreier Resonatoren 16a, 16b und 16c bei solchen SAW-Sensoren gezeigt. Die Reflektoren 16a, 16b und 16c sind derart relativ zu dem Interdigitalwandler 14 positioniert, dass sie zu demselben einen Abstand $d_1$, $d_2$ und $d_3$ aufweisen, gemessen von einem Bezugspunkt 0 aus, der beispielsweise der Mitte des Interdigitalwandlers oder einem andern irgendwie ausgezeichneten Punkt desselben entspricht. Der SAW-Sensor wird im folgenden allgemein mit 10 und das SAW-Substrat allgemein mit 12 angezeigt.

Um Abstandsinformationen über den SAW-Sensor 10 zu gewinnen, wie z.B. die Abstände $d_n$, wobei n die

Nummer des Reflektors 1, 2 oder 3 sein soll, oder die Abstände zwischen den Reflektoren $d_3$-$d_1$ oder dergleichen, wird zunächst in einem Schritt 50 ein Zeitsignal mit einem Träger einer ersten Frequenz $f_1$ und einem Träger einer zweiten Frequenz $f_2$ über den Interdigitalwandler 14 an den SAW-Sensor 10 angelegt, wobei die Frequenzen unterschiedlich sind. Das Zeitsignal ist entweder ein Zwei-Ton-Puls mit den beiden Trägerfrequenzen $f_1$ und $f_2$ oder besteht aus zwei hintereinander ausgesendeten Ein-Ton-Pulsen, von denen der eine die Trägerfrequenz $f_1$ und der andere die Trägerfrequenz $f_2$ aufweist. Im erstgenannten Fall werden in einem Schritt 52 an dem Interdigitalwandler 14 drei reflektierte Zwei-Ton-Antwortsignale mit den Trägerfrequenzen $f_1$ und $f_2$ empfangen, die sich aus Oberflächenwellenpulsen ergeben, die an den Reflektoren 16a, 16b und 16c reflektiert worden sind. In dem zweiten Fall werden in dem Schritt 52 an dem Interdigitalwandler 14 drei reflektierte Ein-Ton-Antwortsignale der Trägerfrequenz $f_1$ auf das Anlegen des Ein-Ton-Signals der Trägerfrequenz $f_1$ hin und danach drei weitere Ein-Ton-Antwortsignale der Trägerfrequenz $f_2$ auf das Anlegen des Ein-Ton-Sendepulses der Trägerfrequenz $f_2$ hin empfangen.

Wie Bezug nehmend auf Fig. 9 und 10 erläutert, erreichen die reflektierten Antwortsignale den Interdigitalwandler 14 aufgrund der verschiedenen Laufzeiten bzw. der unterschiedlichen Abstände der Reflektoren von dem Interdigitalwandler 14 zu unterschiedlichen Zeitpunkten. Zusätzlich erreichen die beiden Träger unterschiedlicher Frequenz eines Zwei-Ton-Antwortpulses bzw. zweier 1-Ton-Antwortpulse, die am gleichen Reflektor reflektiert wurden, den Interdigitalwandler 14 mit unterschiedlichen Phasenänderungen zu einem entsprechenden Referenzoszillatorsignal der Frequenz $f_1$ bzw. $f_2$. Anders ausgedrückt, weist der Träger der Frequenz $f_1$ bei Empfang 52 an dem Interdigitalwandler 14 zu einem Referenzoszillatorsignal der Frequenz $f_1$, aus welchem der eine Träger des Zwei-Ton-Sendepulses abgeleitet worden ist, eine andere Phasenlage auf als der Träger der Frequenz $f_2$ zu einem Referenzoszillatorsignal, aus welchem der Träger der Frequenz $f_2$ des Zwei-Ton-Sendepulses abgeleitet worden ist. Die Bestimmung dieser Phasenänderung des Trägers der ersten Frequenz, $\varphi_{n,1}$, und des Trägers der zweiten Frequenz, $\varphi_{n,2}$, wird in einem Schritt 54 vorgenommen. Dies wird für alle Zwei-Ton-Antwortpulse 1-3 durchgeführt, indem der jeweilige Träger des jeweiligen Antwortpulses mit dem entsprechenden Referenz- und Oszillatorsignal gleicher Frequenz verglichen wird. Jeder Phasenwert $\varphi_{n,i}$ berechnet sich zu

$$\varphi_{n,i} = \text{mod}_{2\pi}\left(2\pi \cdot \frac{2 \cdot d_n f_i}{v_{ph}}\right) \qquad (Gl.\ 6)$$

wobei der Index n die Nummer des Reflektors und der Index i die jeweilige Trägerfrequenz anzeigt und $v_{ph}$ die Phasengeschwindigkeit des SAW-Sensors bzw. des SAW-Substrates, $f_i$ die jeweilige Trägerfrequenz und $d_n$ der Abstand zwischen Interdigitalwandler 14 und jeweiligem Reflektor 16 ist. Der Modulo-Operator trägt dem Umstand Rechnung, dass durch den Phasenvergleich im Schritt 54 lediglich der Phasenrest zwischen 0 und $2\pi$ und nicht die Gesamtphase bestimmt werden kann.

Jeder Abstand $d_n$ wird in dem Schritt 56 folglich mittels folgender Gleichung berechnet:

$$d_n = \frac{(\varphi_{n,2} - \varphi_{n,1}) \cdot v_{ph}}{2\pi \cdot (f_2 - f_1)} \qquad (Gl.\ 7)$$

wobei die Bestimmung eindeutig ist, wenn

$$f_2 - f_1 \leq \frac{v_{ph}}{2 \cdot d_3} \qquad (Gl.\ 8)$$

gilt. Frequenzen $f_1$ und $f_2$ mit einer größeren Differenz als die durch die obige Ungleichung (Gl. 8) angegebene können jedoch ebenfalls ohne Einbußen der Eindeutigkeit verwendet werden, falls a priori Informationen verwendet werden, wie z.B. der zu erwartende Bereich, in welchem sich der zu bestimmende Abstand $d_n$ befindet, wie er beispielsweise durch Fertigungstoleranzen bei der Herstellung der SAW-Sensoren festgelegt ist.

In einem Schritt 58 werden die bestimmten Abstandsinformationen des SAW-Sensors verwendet, um eine dem SAW-Sensor 10 zugeordnete Auswerteschaltung (nicht gezeigt) einzustellen, die ausgebildet ist, um auf die Bezug nehmend auf Fig. 9 und 10 beschriebene Weise absolute Längenänderungen, relative Längenänderungen oder physikalische Größen, wie z.B. Temperatur, Druck oder Kraft, zu berechnen, indem sie Phasenänderungen eines Trägers oder zeitliche Änderungen von Phasenänderungen des Trägers eines Antwortpulses auswertet. Der Schritt 58 umfasst beispielsweise das Einstellen eines Divisors auf den im Schritt 56 bestimmten Abstand. In einem digitalen Fall umfasst dies das Zuführen eines entsprechenden digitalen Wertes. Im analogen Fall kann das Einstellen 58 das entsprechende Einstellen zweier Widerstände eines Spannungsteilers umfassen, um ein dem im Schritt 56 bestimmten Abstand entsprechendes Teilerverhältnis einzustellen. Auf diese Weise ist es bei Anwendung des Verfahrens bei der Herstellung von Messsensoren nicht erforderlich, dass die Fertigungstoleranzen der SAW-Sensoren sehr hoch sind, sondern Schwankungen können nachher bei dem Zusammenbringen von SAW-Sensor und Auswerteschaltung berücksichtigt bzw. ausgeglichen werden. Zudem ist die im vorhergehenden beschriebene Vorgehensweise auch als ständige Vor-Ort-Kalibrierung denkbar.

Bevor im folgenden Bezug nehmend auf Fig. 3 ein spezielles Ausführungsbeispiel für eine Vorrichtung beschrieben wird, die zur Bestimmung von Abstandsinformationen eines SAW-Sensors gemäß den Schritten 50-54 geeignet ist, und hierzu Zwei-Ton-Pulse verwendet und zudem für SAW-Sensoren ausgelegt ist, die wie in Fig. 10 und Fig. 2 dargestellt aufgebaut sind, wird darauf hingewiesen, dass das obige Verfahren von Fig. 1 ferner auch bei anderen SAW-Sensoren eingesetzt werden kann. Ein SAW-Sensor, der zu der Bestimmung derselben physikalischen Größen geeignet ist wie der SAW-Sensor von Fig. 10 bzw. Fig. 2, kann beispielsweise ferner zwei IDTs aufweisen, einen zum Anlegen des Sendepulses und den anderen zum Empfangen der Antwortpulse.

Fig. 3 zeigt ein spezielles Ausführungsbeispiel für eine Vorrichtung zur Bestimmung von Abstandsinformationen eines SAW-Sensors 10, wobei die Vorrichtung allgemein mit 100 angezeigt ist. Die Vorrichtung gliedert sich vornehmlich in eine Einrichtung 102 zum Anlegen eines Zwei-Ton-Pulses an den SAW-Sensor und eine Einrichtung 104 zum Empfangen eines reflektierten Zwei-Ton-Antwortpulses und Bestimmen von Phasenänderungen der Träger des reflektierten Antwortpulses. Beide Einrichtungen 102 und 104 sind über einen Sende/Empfangsschalter 106, der alternativ beispielsweise auch durch ein Zirkulator ersetzt sein kann, und über eine zwischen Schalter 106 und Interdigitalwandler 14 befindliche Kontaktlosübertragungsstrecke 108, die durch zwei Antennen 108a und 108b implementiert ist, mit dem Interdigitalwandler 14 des SAW-Sensors 10 gekoppelt. Alternativ könnte auch eine drahtgebundene Kopplung zwischen Schalter 106 und IDT 14 vorgesehen sein. Ein Ausgang der Einrichtung 102, an der dieselbe den Sendepuls ausgibt, ist mit einem Eingang des Schalters 106 verbunden. Ein Eingangs/Ausgangsanschluß des Schalters 106 ist mit dem Interdigitalwandler 14 verbunden. Ein Ausgang des Schalters 106 ist mit einem Eingang der Einrichtung 104 verbunden. Vier Ausgänge der Einrichtung 104 bilden die Ausgänge 110a, 110b und 112a, 112b der Vorrichtung 100, wobei an diesen Ausgängen die Inphasen- und Quadraturkomponenten I und Q zu jeder Trägerfrequenz der Antwortpulse ausgegeben werden, aus denen durch Bildung des Arcustangens aus dem Verhältnis von jeweiliger Q-Komponente zur I-Komponente ein Phasenwert $\varphi_2$ bzw. $\varphi_1$ ableitbar ist, die die Phasenlagen der Träger des Antwortpulses aufgrund der Laufzeit durch des Substrat 14 angeben.

Insbesondere besteht die Einrichtung 102 aus einem Referenzoszillator 114 der ein Referenzoszillatorsignal der Trägerfrequenz $f_1$ erzeugt, einem Referenzoszillator 116, der ein Referenzoszillatorsignal der Trägerfrequenz $f_2$ erzeugt, einem Addierer 118, dessen Eingänge jeweils mit einem Ausgang der Referenzoszillatoren 114 und 116 verbunden sind, einem Pulsmodulator 120, dessen Eingang mit einem Ausgang des Addierers 118 verbunden ist, und einem Verstärker 122, dessen Eingang mit einem Ausgang des Pulsmodulators 120 verbunden ist, und dessen Ausgang mit dem Ausgang der Einrichtung 102 bzw. dem Eingang des Schalters 106 verbunden ist.

Die Einrichtung 104 besteht aus einem Empfangsverstärker 124, dessen Eingang den Eingang der Einrichtung 104 bildet und mit dem Ausgang des Schalters 106 verbunden ist, einem Splitter 125, dessen Eingang mit dem Ausgang des Empfangsverstärkers 124 verbunden ist, einem Mischer 126, dessen erster Eingang mit einem ersten Ausgang des Splitters 125 und dessen zweiter Eingang mit dem Ausgang des Referenzoszillators 116 verbunden ist, einem Mischer 127, dessen erster Eingang mit dem ersten Ausgang des Splitters 125 und dessen zweiter Eingang über einen 90°-Phasenschieber 128 mit dem Ausgang des Referenzoszillators 116 verbunden ist, einem Mischer 129, dessen erster Eingang mit einem zweiten Ausgang des Splitters 125 und dessen zweiter Eingang mit dem Ausgang des Referenzoszillators 114 verbunden ist, einem Mischer 130, dessen erster Eingang mit dem zweiten Ausgang des Splitters 125 und dessen zweiter Eingang über einen 90°-Phasenschieber 131 mit dem Ausgang des Referenzoszillators 114 verbunden ist, einem Tiefpassfilter 132, dessen Eingang mit einem Ausgang des Mischers 126 verbunden ist, einem Tiefpassfilter 133, dessen Eingang mit einem Ausgang des Mischers 127 verbunden ist, einem Tiefpassfilter 134, dessen Eingang mit einem Ausgang des Mischers 129 verbunden ist, und einem Tiefpassfilter 135, dessen Eingang mit einem Ausgang des Mischers 130 verbunden, wobei die Ausgänge der Tiefpassfilter 132 - 135 die Ausgänge 110a,b bzw. 112a,b der Einrichtung 104 bilden. Die Mischer 126 und 127 und der 90°-Phasenschieber 128 bilden zusammen einen I/Q-Demodulator 136, wobei die Mischer 129 und 130 und der 90°-Phasenschieber 131 zusammen einen I/Q-Demodulator 138 bilden.

Nachdem im vorhergehenden der Aufbau der Vorrichtung von Fig. 3 beschrieben worden ist, wird im folgenden deren Funktionsweise beschrieben. Der Referenzoszillator 114 erzeugt ein Oszillatorsignal der Frequenz $f_1$, während der Referenzoszillator 116 ein Oszillatorsignal $f_2$ der Frequenz $f_2$ erzeugt. Beide Oszillatorsignale werden durch den Addierer 118 einander überlagert und durch den Pulsmodulator 120 pulsartig über den Sendeverstärker 122 an den Schalter 106 durchgelassen oder gesperrt. Auf diese Weise werden Zwei-Ton-Pulse mit einem Träger der Frequenz

$f_1$ und einem Träger der Frequenz $f_2$ erzeugt. Der Schalter 106 leitet die Zwei-Ton-Sendepulse kontaktlos über die Antennen 108a und 108b an den Interdigitalwandler 14 weiter, um somit Oberflächenwellen in dem Substrat 12 des SAW-Sensors zu erzeugen. Wie oben beschrieben, ergeben an den Reflektoren 16 des SAW-Sensors 10 reflektierte Oberflächenwellen an dem Interdigitalwandler 14 reflektierte Zwei-Ton-Antwortpulse, die kontaktlos über die Antennen 108a und 108b an den Schalter 106 übertragen werden und von demselben über den Empfangsverstärker 124 und den Splitter 125 an die IDTs 136 und 138 bzw. die Mischer 126, 127, 129 und 130 weitergeleitet werden. Die Mischer 126 und 127 mischen die empfangenen Zwei-Ton-Antwortpulse mit dem Oszillatorsignal des Referenzoszillators 116 als dem Mischsignal. Die Mischer 129 und 130 mischen die empfangenen Zwei-Ton-Antwortpulse mit dem Oszillatorsignal des Referenzoszillators 114 als dem Mischsignal. Die Ausgangssignale der Mischer 126, 127, 129 und 130 weisen einen Gleichsignalanteil auf, der der I-Komponente $I_2$ des Trägers der Frequenz $f_2$, der Q-Komponente $Q_2$ des Trägers der Frequenz $f_2$, der I-Komponente $I_1$ des Trägers der Frequenz $f_1$ bzw. der Q-Komponente $Q_1$ des Trägers der Frequenz $f_1$ entspricht, aus denen durch Berechnung von $\arctan(Q_2/I_2)$ bzw. $\arctan(Q_1/I_1)$ jeweils die Phasenän-derung $\varphi_2$ bzw. $\varphi_1$ des jeweiligen Trägers des Zwei-Ton-Antwortpulses aufgrund der Laufzeit durch das Substrat 14 berechnet werden kann. Durch die Tiefpassfilter 132-135 werden die anderen Frequenzanteile der Ausgangssignale der Mischer 126, 127, 129 und 130 herausgefiltert. An den Ausgängen 110a, 110b liegen somit Signale an, die die Phasenänderung bzw. die Phasenlage $\varphi_2$ des Trägers mit der Frequenz $f_2$ des empfangenen Zwei-Ton-Antwortpulses relativ zu dem Referenzoszillatorsignal des Referenzoszillators 116 angeben, während an den Ausgängen 112a, 112b somit Signale anliegen, die die Phasenänderung bzw. die Phasenlage $\varphi_1$ des Trägers mit der Frequenz $f_1$ des emp-fangenen Zwei-Ton-Antwortpulses relativ zu dem Referenzoszillatorsignal des Referenzoszillators 116 angeben.

Aus den beispielsweise mittels speziellen Analog/Digitalwandlern aus den I- und Q-Werte $I_1$, $I_2$, $Q_1$ und $Q_2$ bestimmten Phasenwerten $\varphi_1$ und $\varphi_2$ können, wie im vorhergehenden Bezug nehmend auf Fig. 1 beschrieben, Abstandsinformationen über den SAW-Sensor 10 gewonnen werden. Hierzu könnten beispielsweise die Signale an den Ausgängen 110 und 112 in Analog/Digital-Wandlern digitalisiert und die Rechnung nach Gl. 7 durchgeführt werden. Die berechneten Abstandsinformationen können daraufhin verwendet werden, um eine dem SAW-Sensor 10 zugeordnete Auswerteschaltung einzustellen, die beispielsweise aus einem direkt mit dem Pulsmodulator 120 verbundenen Referenzoszillator 114, dem Sendeverstärker 122, dem Schalter 106, dem Empfangsverstärker 124, dem Mischer 126, dem Tiefpassfilter 130 und einer digitalen Auswertelogik aufgebaut ist, die die Bezug nehmend auf Fig. 9 und 10 beschriebenen Berechnungen digital durchführt und aufgrund der Einstellung dabei als Divisor den bestimmten Abstand d zugrunde legt. Fertigungsschwankungen bei der Herstellung der SAW-Sensoren 10 können hierdurch dadurch ausgeglichen werden, dass die denselben zugeordneten Auswerteschaltungen geeignet eingestellt werden.

Anhand der Fig. 4-8 werden im folgenden Ausführungsbeispiele der vorliegenden Erfindung beschrieben, bei denen mittels Bestrahlung des SAW-Sensors mit einem Zeitsignals mit zwei Trägern unterschiedlicher Frequenzen eine Bestimmung von Nicht-Idealitäten eines dem SAW-Sensor zugeordneten I/Q-Demodulators und eine Kalibrierung desselben durchgeführt wird.

Fig. 4 beschreibt einen Verfahrensablauf zur Bestimmung einer Nicht-Idealität eines dem SAW-Sensor empfangsseitig zugeordneten I/Q-Demodulators und zur anschließenden Kalibrierung desselben gemäß einem allgemeinen Ausführungsbeispiel der vorliegenden Erfindung. Bei der Beschreibung von Fig. 4 wird wiederum zunächst davon ausgegangen, dass es sich bei dem SAW-Sensor um einen SAW-Sensor des in Fig. 2 gezeigten Typs handelt, wobei während der Beschreibung von Fig. 4 auch auf Fig. 2 Bezug genommen wird. Zudem geht der Verfahrensablauf von Fig. 4 davon aus, dass dem SAW-Sensor ein I/Q-Demodulator empfangsseitig zugeordnet ist, der beispielsweise über einen Ausgang eines Sende/Empfangsschalters mit dem Interdigitalwandler 14 des SAW-Sensors 10 gekoppelt ist.

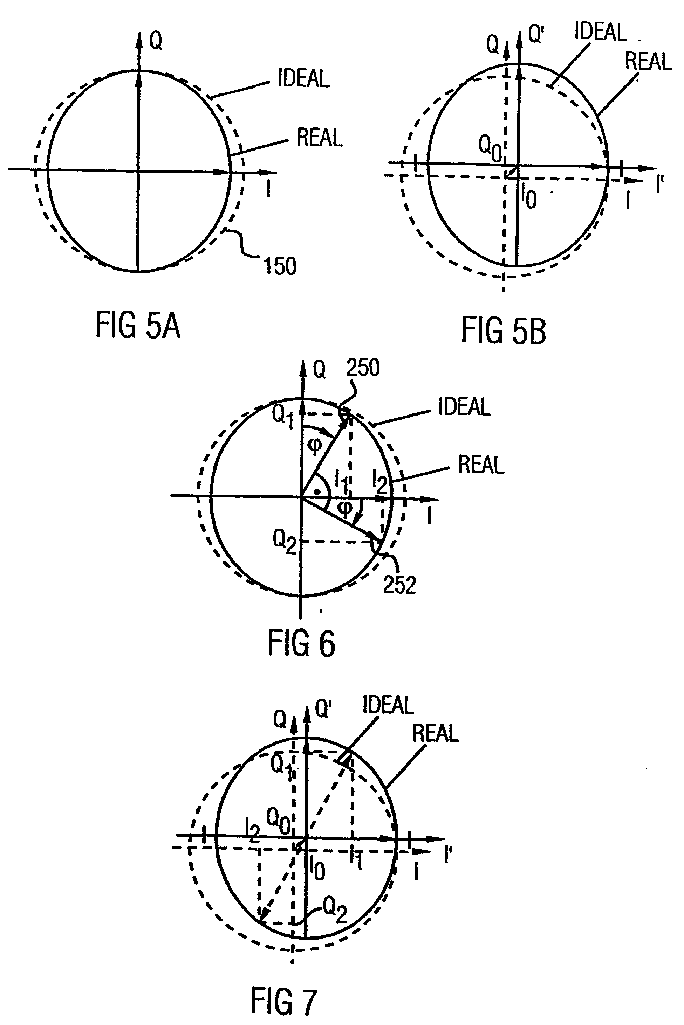

Wie bereits bezugnehmend aus Fig. 3 beschrieben, zerlegt ein I/Q-Demodulator ein Eingangssignal, in dem vorliegenden Fall die Antwortsignale von dem SAW-Sensor auf das Anlegen der Sendesignale hin, in eine Inphasen-Komponente I und eine Quadratur-Komponente Q. Die Inphasen-Komponente wird auch manchmal als I-Komponente oder Imaginärteil bezeichnet, und die Quadratur-Komponente wird auch manchmal als Quadratur-Phasenkomponente, Q-Komponente oder Realteil bezeichnet. I/O-Demodulatoren können sowohl rein analog als auch analog/digital-aufgebaut sein. Die Funktionsweise von I/Q-Demodulatoren kann Fig. 5a und 5b entnommen werden. Beide Figuren zeigen Konstellationsdiagramme von I/Q-Demodulatoren, wobei in dem Fall von Fig. 5a der I/Q-Demodulator ein I/Q-Missverhältnis aufweist, während er in dem Fall von Fig. 5b unerwünschte Inphasen- und Quadratur-Offset- bzw. -Versatzwerte $I_0$ und $Q_0$ aufweist. In den Konstellationsdiagrammen der Fig. 5a und 5b entspricht die x-Achse der I-Komponente und die y-Achse der Q-Komponente. Durchgezogenen Linien beziehen sich auf den realen, d.h. nicht-idealen I/Q-Demodulator, während sich die gestrichelten Linien auf einen idealen I/Q-Demodulator beziehen. Wie es in Fig. 5a zu sehen ist, ist der reale I/Q-Demodulator darin fehlerhaft, dass er bei Zerlegung in die Inphasen- und Quadraturkomponente die I-Komponente im Vergleich zur Q-Komponente verhältnismäßig klein ist. Aus Fig. 5b ist zu erkennen, dass der nicht-ideale I/Q-Demodulator im Vergleich zu dem idealen I- und Q-Komponenten I und Q ausgibt, die im Vergleich zu idealen Werten I und Q um additive Offsetwerte $Q_0$ und $I_0$ verschoben sind. Anders ausgedrückt kann es sein, dass ein realer I/Q-Demodulator I- bzw. Q-Komponenten ausgibt, die zum einen nicht exakt orthogonal zueinander sind und zum anderen nicht gleich ausgesteuert sind (Fig. 5a), und/oder es besteht die Gefahr, dass durch Übersprechen in der Schaltung des I/Q-Demodulators ein erwünschter Gleichspannungsanteil auftritt, der eine Verschiebung um Werte $I_0$ und $Q_0$ bewirkt (Fig. 5b).

Die Nicht-Idealität eines I/Q-Demodulators in dem Empfangszustand eines SAW-Sensors ergibt eine fehlerhafte Bestimmung der Messwerte durch den SAW-Sensor. Wie es Bezug nehmend auf Fig. 9 und 10 beschrieben worden ist, werden bei dem SAW-Sensor Phasenlagen der Träger der Antwortsignale oder Änderungen derselben als Maß für einen Messwert oder die Änderung eines Messwertes herangezogen. Wie bereits bezugnehmend auf Fig. 3 beschrieben kann die Phasenlage aus der erhaltenen I- und Q-Komponente I und Q eines realen I/Q-Demodulators auf folgende Weise berechnet werden:

$$\varphi = \arctan \frac{Q}{I} \qquad\qquad (\text{Gl. 9})$$

Beide Bezug nehmend auf Fig. 5a und 5b beschriebenen Nicht-Idealitäten des I/Q-Demodulators wirken sich fehlerhaft auf die Bestimmung der Phasenlage $\varphi$ aus, da das Verhältnis der I- bzw. Q-Komponente I' bzw. Q' von dem der idealen Werte um einen konstanten Faktor $G_{mis}$, d.h. $Q/I = (1/G_{mis})(Q'/I')$, bzw. um additive Werte in Zähler und Nenner, d.h. $Q/I = (Q'-Q_0)/(I'-I_0)$, abweicht.

Um diese Nicht-Idealitäten zu bestimmen bzw. auszugleichen, wird in einem Schritt 200 zunächst ein Zeitsignal mit einem Träger einer ersten Frequenz $f_1$ und einem Träger einer zweiten Frequenz $f_2$ an den SAW-Sensor 10 angelegt. Die Frequenzen $f_1$ und $f_2$ werden hierbei derart ausgewählt, dass die Phasenlagen des ersten und des zweiten Trägers des Antwortsignales aufgrund der Laufzeit durch den SAW-Sensor eine vorbestimmte Phasenbeziehung zueinander, wie z.B. einen Phasenunterschied von 90° oder 180°, aufweisen. Dieser kann auf verschiedene Weisen erzielt werden. Es wäre möglich, mittels des Schaltungsaufbaus von Fig. 3 die Frequenzen $f_1$ und $f_2$ der dortigen Referenzoszillatoren so lange zu verstellen, bis man geeignete Frequenzen $f_1$ und $f_2$ gefunden hat, und mit dieser Kenntnis den Schritt 200 durchführen. Zum Anlegen von Sende- bzw. Zeitsignal und Empfangen des Antwortsignals wird als Zeitsignal wiederum entweder ein Zwei-Ton-Sendepuls oder zwei sequentielle Ein-Ton-Sendepulse verwendet. Einfacher jedoch gestaltet sich das Problem, wenn der Abstand zwischen IDT und dem jeweiligen Reflektor 16 bereits als bekannt vorausgesetzt werden kann. Der Abstand d kann beispielsweise durch die Schritt 50-56 von Fig. 1 gewonnen worden sein. Natürlich ist jedes andere Messverfahren ebenfalls möglich, oder es werden SAW-Sensoren verwendet, die aufgrund ihrer Fertigungstoleranzen einen genügend genau definierten Abstand aufweisen. Unter Kenntnis des Abstandes zwischen IDT und dem jeweiligen Reflektor, dessen Antwortpuls zur Auswertung verwendet wird, kann bei Vorgabe einer Frequenz $f_j$ (j = 1 oder 2) die andere Frequenz $f_k$ (k = 1 oder 2, j≠k) je nach dem gewünschten Phasenunterschied zwischen den Phasenlagen der einzelnen Träger berechnet werden. Um einen Phasenunterschied von 180°, d.h. $\pi$, einzustellen, wird in Abhängigkeit von der einen Frequenz die andere derart eingestellt, dass folgende Gleichung gültig ist:

$$f_1 - f_2 = \frac{2n-1}{4} \frac{v_{ph}}{d} \qquad\qquad (\text{Gl. 10})$$

wobei $v_{ph}$ wiederum die Phasengeschwindigkeit auf dem SAW-Sensor 10, d der Abstand zwischen dem IDT 14 und demjenigen Reflektor ist, an dem der auszuwertende Antwortpuls bzw. die auszuwertenden Antwortpulse reflektiert worden sind, und n eine beliebige Ganzzahl ist. Für einen Phasenunterschied von 90° werden die Frequenzen $f_1$ und $f_2$ relativ zueinander derart eingestellt, dass folgende Gleichung gilt:

$$f_1 - f_2 = \frac{n - \frac{1}{2}}{4} \frac{v_{ph}}{d} \qquad\qquad (\text{Gl. 11})$$

Insbesondere werden die Frequenzen $f_1$ und $f_2$ derart ausgewählt, dass sich bei einem Reflektor die Phasen $\varphi_1(f_1)$ und $\varphi_2(f_2)$, die sich bei den Trägern der unterschiedlichen Frequenzen des bzw. der Antwortpulse ergeben, gerade um 90° bei Bestimmung des I/Q-Missverhältnisses $G_{mis}$ und um 180° bei Bestimmung der Offsetwerte $I_0$ und $Q_0$ unterscheiden.

Der zu prüfende bzw. zu kalibrierende I/Q-Demodulator erzeugt daraufhin in einem Schritt 202 aus dem empfangenden, auszuwertenden Zwei-Ton-Antwortpuls bzw. den empfangenen, auszuwertenden Ein-Ton-Antwortpulsen, der bzw. die von dem jeweiligen Reflektor reflektiert worden sind, Inphasen- und Quadraturkomponenten, und zwar eine I-Komponente $I_1$ und Q-Komponente $Q_1$ für den Träger der ersten Frequenz $f_1$ und eine I-Komponente $I_2$ und eine Q-Komponente $Q_2$ für den Träger der zweiten Frequenz. In dem Fall der Verwendung eines Zwei-Ton-Pulses muss es beispielsweise ermöglicht werden, dass der I/Q-Demodulator den Zwei-Ton-Antwortpuls zweimal hintereinander auswerten kann oder es wird bei SAW-Sensor mit zwei oder mehr Reflektoren von dem Umstand Gebrauch gemacht, dass zwei zueinander zeitlich versetzte 2-Ton-Antortpulse entstehen, so dass die Frequenz des einen Trägers in Hinblick auf den einen Reflektorabstand und die Frequenz des anderen Trägers in Hinblick auf einen anderen Reflektorabstand eingestellt werden kann. Einfacher gestaltet sich der Fall der Verwendung von Ein-Ton-Pulsen, da hier der I/Q-Demodulator die I- bzw. Q-Komponenten $I_1$, $I_2$, $Q_1$ und $Q_2$ paarweise hintereinander erzeugen kann.

Aus den in Schritt 202 gewonnenen Inphasen- und Quadraturkomponenten wird in einem Schritt 204 die Nicht-Idealität des I/Q-Demodulators basierend auf den erhaltenen I- und Q-Komponenten bestimmt. Bei der Bestimmung in Schritt 204 wird der Umstand ausgenutzt, dass die bei Schritt 200 verwendeten Trägerfrequenzen $f_1$ und $f_2$ geeignet eingestellt waren, nämlich derart, dass der Phasenunterschied zwischen den Phasenlagen der Träger des bzw. der Antwortpulse 90° oder 180° betrug.

In Schritt 204 lässt sich das I/Q-Missverhältnis $G_{mis}$ des I/Q-Demodulators berechnen, wenn die Phasenlagen der Ein-Ton-Antwortpulse bzw. des Zwei-Ton-Antwortpulses der Träger der Frequenzen $f_1$ bzw. $f_2$ um 90° zueinander phasenverschoben sind, da in diesem Fall für einen idealen Quadraturmodulator gelten muss:

$$I_1 = Q_2$$

$$I_2 = Q_1 \qquad \text{(Gl. 12)}$$

In Schritt 204 wird in diesem Fall der Einstellung des Phasenunterschieds auf 90° das Missverhältnis $G_{mis}$ bei einem realen Demodulator mit folgender Gleichung bestimmt:

$$G_{mis} = \frac{Q_1}{I_2} = \frac{Q_2}{I_1} \qquad \text{(Gl. 13)}$$

Die Richtigkeit dieser Aussage lässt sich leicht anhand des Konstellationsdiagramms von Fig. 6 verifizieren, das demjenigen von Fig. 5a entspricht, und in das jedoch zusätzlich exemplarische Phasenzeiger 250 und 252 für die beiden Träger der Frequenzen $f_1$ und $f_2$ des bzw. der Antwortpulse eingezeichnet sind.

In dem Fall, dass die Phasenlagen der Ein-Ton-Antwortpulse bzw. des Zwei-Ton-Antwortpulses von $f_1$ und $f_2$ um 180° phasenverschoben sind, lässt sich der Phasenversatz $I_0$ und $Q_0$ in Schritt 204 folgendermaßen bestimmen:

$$I_0 = I_1 + I_2$$

$$Q_0 = Q_1 + Q_2 \qquad \text{(Gl. 14)}$$

wobei I2 < 0 und Q2 < 0 gilt.

Basierend auf den in Schritt 204 bestimmten Nicht-Idealitäten wird in Schritt 206 der I/Q-Demodulator geeignet kalibriert. In dem Fall, dass in Schritt 204 das I/Q-Missverhältnis $G_{mis}$ bestimmt worden ist, wird beispielsweise der I/Q-Demodulator kalibriert, indem der I-Ausgang des I/Q-Demodulators mit dem Faktor $G_{mis}$ multipliziert wird. In dem Fall, dass in Schritt 204 der Gleichsignaloffset des I/Q-Demodulators bestimmt worden ist, wird beispielsweise durch einen Subtrahierer an den I- bzw. Q-Ausgängen des I/Q-Demodulators dafür gesorgt, dass von den Ausgangssignalen für die I- und Q-Komponente des I/Q-Demodulators die Werte $I_0$ und $Q_0$ subtrahiert werden.

Natürlich kann das Verfahren nach Fig. 4 auch bei anderen SAW-Sensoren eingesetzt werden, und zwar, wie es bereits Bezug nehmend auf Fig. 1 erwähnt worden ist, beispielsweise bei SAW-Sensoren mit jeweils einem IDT zum Senden der Sendepulse und einem weiteren IDT zum Empfangen der Antwortpulse.

Bezug nehmend auf Fig. 8 wird im folgenden ein spezielles Ausführungsbeispiel für eine Anordnung beschrieben, die zur Ausführung der Schritte von Fig. 4 geeignet ist, d.h. zum Anlegen eines geeigneten Zeitsignals an einen SAW-Sensor 10 mit geeigneten Trägerfrequenzen $f_1$ und $f_2$, wobei ein I/Q-Demodulator, der in Fig. 8 allgemein mit 300 angezeigt ist, in den Empfangszug des SAW-Sensors geschaltet ist und das Antwortsignal in eine I- und eine Q-Komponente I und Q zerlegt. Die Anordnung von Fig. 8 ist wiederum auf SAW-Sensoren des Typs von Fig. 2 bzw. Fig. 9 ausgelegt, d.h. SAW-Sensoren mit einem IDT als sowohl Erregungs- als auch Empfangseinrichtung. Zudem ist die Anordnung von Fig. 8 auf die Verwendung von Ein-Ton-Sendepulse ausgerichtet.

Der in Fig. 8 gezeigte Aufbau gliedert sich vornehmlich in einen Abschnitt 302 zum Anlegen geeigneter Ein-Ton-Sendepulse an den SAW-Sensor 10, eine Steuereinrichtung 304, einen Sende/Empfangsschalter 306, den zu prüfenden bzw. zu kalibrierenden I/Q-Demodulator 300 und den SAW-Sensor 10, dem der I/Q-Demodulator zugeordnet ist. Ein Ausgang der Einrichtung 302, an dem die Ein-Ton-Sendepulse ausgegeben werden, ist mit einem Eingang des Sende/Empfangsschalters 306 verbunden. Ein Eingangs/AusgangsAnschluss des Schalters 306 ist über eine Kontaktlosschnittstelle 308, die durch zwei Antennen 308a und 308b implementiert ist, mit dem Interdigitalwandler 14 des SAW-Sensors 10 verbunden. Ein Ausgang des Schalters 306 ist mit einem Eingang des I/Q-Demodulators 300 verbunden.

Die Einrichtung 302 umfasst einen steuerbaren Referenzoszillator 310. Der steuerbare Referenzoszillator 310 umfasst einen Steuereingang 314, über welchen die Oszillatorfrequenz des Oszillators auf zumindest zwei Frequenzen, $f_1$ oder $f_2$, einstellbar ist. Der steuerbare Oszillator 310 gibt an seinem Ausgang je nach Steuersignal an dem Steuereingang das Oszillatorsignal der Frequenz $f_1$ oder $f_2$ aus. Der Ausgang des steuerbaren Oszillators 310 ist mit einem Eingang eines Pulsmodulators 316 verbunden, dessen Ausgang wiederum wiederum mit einem Eingang eines Sendeverstärkers 318 verbunden ist. Ein Ausgang des Sendeverstärkers 318 bildet den Ausgang der Einrichtung 302 und ist mit dem Eingang des Schalters 306 verbunden. Der steuerbare Oszillator 310, der Pulsmodulator 316 und der Sendeverstärker 318 bilden zusammen die Einrichtung 302. Der Steuereingang des Oszillators 310 ist mit der Steuereinrichtung 304 verbunden. Auch der Pulsmodulator 316 weist einen Steuereingang auf, der mit der Steuereinrichtung 304 verbunden ist.

Der I/Q-Demodulator ist in Fig. 8 auf exemplarische Weise aufgebaut. Er besteht aus einem Leistungsteiler bzw. Power Splitter 320, zwei Mischern 322, 324, einem 90°-Phasenschieber 326, einem steuerbaren Oszillator 328 und zwei Tiefpassfiltern 330 und 332. Ein Eingang des Leistungsteilers 320 bildet den Eingang des I/Q-Demodulators 300 und ist mit dem Ausgang des Schalters 306 verbunden. Ein erster Ausgang des Leistungsteilers 320 ist mit einem ersten Eingang des Mischers 322 verbunden. Ein zweiter Ausgang des Leistungsteilers 320 ist mit einem ersten Eingang des Mischers 324 verbunden. Ein zweiter Eingang des Mischers 322 ist mit einem Ausgang des steuerbaren Oszillators 310 verbunden, der wiederum über den 90°-Phasenschieber 326 ebenfalls mit einem zweiten Eingang des Mischers 324 verbunden ist. Die beiden Ausgänge der Mischer 322 und 324 sind über die Tiefpassfilter 330 und 332 mit den Ausgängen I und Q des I/Q-Demodulators verbunden. Ein Steuereingang des steuerbaren Oszillators 328 ist mit der Steuereinrichtung 304 verbunden.

Nachdem im vorhergehenden der Aufbau bzw. die Verschaltung der einzelnen Komponenten beschrieben worden ist, wird im folgenden deren Funktionsweise und Zusammenspiel bei der Bestimmung und Beseitigung von Nichtidealitäten des I/Q-Modulators nach Fig. 4 erläutert. Über den Steuereingang des Oszillators 310 werden zunächst durch die Steuereinrichtung 204 die Frequenzen $f_1$ und $f_2$, wie Bezug nehmend auf den Schritt 200 von Fig. 4 erläutert, geeignet eingestellt.

Das Oszillatorsignal des Oszillators 310 wird Pulsmodulator 316 impulsmäßig weitergeleitet. Die Steuereinrichtung 304 steuert den Pulsmodulator 316 derart, dass zwischen den Umschaltungen zwischen den Frequenzen $f_1$ und $f_2$ der Pulsmodulator 316 zumindest einmal das Oszillatorsignal pulsartig an den Sendeverstärker 318 weiterleitet. Der so erzeugte Ein-Ton-Sendepuls der Frequenz $f_1$ oder $f_2$ wird über den Schalter 306, die Antennen 308a, 308b und den Interdigitalwandler 14 an den SAW-Sensor 10 angelegt, wo Oberflächenwellen an einem Reflektor 16 reflektiert werden, und wieder zurückkehrend zu dem Interdigitalwandler 14 ein Ein-Ton-Antwortsignal ergeben, welches über die Antennen 308a, 308b und den Schalter 306, der zwischenzeitlich beispielsweise unter Steuerung der Steuereinrichtung 304 von einem Zustand, in dem Verstärker 122 mit IDT 14 verbunden ist, zu einem Zustand, in dem IDT 14 mit Verstärker 124 verbunden ist, gewechselt hat, und den Leistungsteiler 320 an die beiden Mischer 322 und 324 weitergeleitet wird. Alternativ ist der Schalter 306 als Zirkulator gebildet. Die Mischer 322 und 324 mischen das Antwortsignal mit einem Mischsignal, welches sie von dem steuerbaren Oszillator 310 erhalten, und welches noch auf die letzte Sendefrequenz, d.h. die Frequenz des Antwortpulses, eingestellt ist. Die Steuereinrichtung 304 steuert den steuerbaren Oszillator 310 folglich derart, dass sein Oszillatorsignal zum Zeitpunkt des Empfangs des Antwortpulses noch die gleiche Frequenz erzeugt wie die Trägerfrequenz des Sende- bzw. Antwortpulses. Der Mischer 324 mischt das Antwortsignal jedoch mit einem Mischersignal, welches zu dem Mischersignal des Mischers 322 durch den 90°-Phasenschieber 326 um 90° phasenverschoben ist, während der Mischer 322 das Oszillatorsignal des steuerbaren Oszillators 328 direkt als Mischersignal verwendet. Die Gleichanteile der Signale an den Ausgängen der Mischer 322 und 324 entsprechen somit dem Cosinus bzw. dem Sinus der relativen Phasenlage des Antwortsignals zu dem Oszillatorsignal, welches der steuerbare Oszillator 328 erzeugt. Durch die Tiefpassfilter 330 und 332 werden die Wechselsignalanteile herausgefiltert. An den Ausgängen I und Q des I/Q-Demodulators liegen folglich die I- und Q-Komponenten I und Q an, welche aufgrund der Nicht-Idealitäten des I/Q-Demodulators, wie sie im vorhergehenden Bezug nehmend auf Fig. 5a und 5b beschrieben wurden, von idealen Werten abweichen können.

Die Steuereinrichtung 304 sorgt über den Pulsmodulator 316 dafür, dass zumindest zwei Ein-Ton-Pulse mit der Frequenz $f_1$ bzw. $f_2$ an den SAW-Sensor 10 angelegt werden. Die sich ergebenden I- und Q-Komponentenwerte $I_1$, $Q_1$ für den Antwortpuls der Trägerfrequenz $f_1$ und die sich ergebenden I- und Q-Komponentenwerte $I_2$, $Q_2$ für den Antwortpuls der Trägerfrequenz $f_2$ werden in einer sich an den I/Q-Demodulator 300 anschließenden Einrichtung, wie z.B. einem Computer, wie Bezug nehmend auf Schritt 204 von Fig. 4 verarbeitet, um das I/Q-Missverhältnis $G_{mis}$ oder den I- und Q-Offsetwert $I_0$ und $Q_0$ zu erhalten. Basierend auf der bestimmten Nicht-Idealität können dann beispielsweise bei der Kalibration gemäß Schritt 208 von Fig. 4 beispielsweise der 90°-Phasenschieber 326 abhängig von dem bestimmten I/Q-Missverhältnis $G_{mis}$, der Leistungsteiler 320 gemäß dem I/Q-Missverhältnis $G_{mis}$ und/oder die Mischer 322 und 324 gemäß den I- und Q-Offsetwerten $I_0$ und $Q_0$ eingestellt bzw. kalibriert werden.

Die vorhergehenden Ausführungsbeispiele ermöglichten folglich durch die Verwendung zweier Trägersignale mit Frequenzen $f_1$ und $f_2$, die entweder gleichzeitig oder hintereinander ausgesendet werden, allgemein ausgedrückt eine drahtlose Abfrage von Oberflächenwellensensoren mittels Funktechnik und insbesondere die Bestimmung der Abstände der Reflektoren auf dem SAW-Sensor, wodurch beliebige SAW-Sensoren oder zumindest SAW-Sensoren mit geringeren Fertigungstoleranzen bezüglich der Reflektorabstände, verwendbar sind. Außerdem ermöglichten sie Messfehler, die in der zugehörigen analogen Elektronik entstehen, insbesondere bei Verwendung eines Zero-IF-Empfängers, zu bestimmen und zu eliminieren. Anders ausgedrückt können durch die Verwendung von zwei Trägerfrequenzen $f_1$ und $f_2$ unter Ausnutzung der gemessenen Phasenlagen der Antwortpulse Kalibrierfunktionen realisiert werden. Folglich können durch die obigen Ausführungsbeispiele nicht nur Abstände für jeden SAW-Sensor elektronisch bestimmt sondern auch die Elektronik auf den jeweiligen SAW-Sensortyp kalibriert werden. Weiterhin können Fehler in der analogen Elektronik gemessen und kompensiert werden.

Die bezugnehmend auf Fig. 4-8 beschriebenen Ausführungsbeispiele können beispielsweise in Hinblick auf die zu berechnenden Nichtidealitäten und den verwendeten einzustellenden Phasenunterschied zwischen den Phasenlagen der Träger variiert werden. Bei den Ausführungsbeispielen der Fig. 3 und 8 kann zudem der jeweils beschriebene Aufbau deutlich variiert werden. Anstelle analoger Komponenten können digitale eingesetzt werden. Zudem können die Anordnungen sowohl als Station bei der Herstellung von SAW-Sensoren bzw. als Stationen bei dem Zusammenbringen der SAW-Sensoren mit zugeordneter Auswerteschaltung und zugeordnetem I/Q-Demodulator vorgesehen sein als auch als den SAW-Sensoren ständig zugeordnete Vorrichtungen, die neben den vorgehend beschrieben Aufgaben auch Aufgaben bezüglich der eigentlichen Messung physikalischer Parameter übernehmen. Ferner kann, wie es ohne weiteres ersichtlich ist, die Anordnung von Fig. 8 auch als Vorrichtung nach Fig. 3 dienen, wobei hierdurch die Bestimmung der Reflektorabstände mittels sequentieller 1-Ton-Pulsen implementiert würde.

Insbesondere wird darauf hingewiesen, dass abhängig von den Gegebenheiten das erfindungsgemäße Schema zur Vermessung und Kalibrierung von SAW-Sensoren und deren zugehöriger Elektronik vollständig in Hardware oder auch in Software implementiert sein kann. Die Implementation kann auf einem digitalen Speichermedium, insbesondere einer Diskette oder einer CD mit elektronisch auslesbaren Steuersignalen erfolgen, die so mit einem programmierbaren Computersystem zusammenwirken können, dass das entsprechende Verfahren ausgeführt wird. Allgemein besteht die Erfindung somit auch in einem Computerprogrammprodukt mit auf einem maschinenlesbaren Träger gespeicherten Programmcode zur Durchführung des erfindungsgemäßen Verfahrens, wenn das Computerprogrammprodukt auf einem Rechner abläuft. In anderen Worten ausgedrückt kann die Erfindung somit als ein Computerprogramm mit einem Programmcode zur Durchführung des Verfahrens realisiert werden, wenn das Computerprogramm auf einem Computer abläuft.

## Patentansprüche

1. Vorrichtung zum Bestimmen von Abstandinformationen eines SAW-Sensors (10), der einen Reflektor (16), eine Erregungseinrichtung (14) und eine Empfangseinrichtung (14) aufweist, mit
einer Einrichtung (102) zum Anlegen eines Zeitsignals mit einem Träger einer ersten Frequenz und einem Träger einer zweiten Frequenz an den SAW-Sensor (10) über die Erregungseinrichtung (14), wobei die erste und die zweite Frequenz unterschiedlich sind;
einer Einrichtung (104) zum Empfangen eines reflektierten Signals mit einem Träger der ersten und einem Träger der zweiten Frequenz an der Empfangseinrichtung (14) und zum Bestimmen einer ersten Phasenänderung des Trägers der ersten Frequenz des reflektierten Signals und einer zweiten Phasenänderung des Trägers der zweiten Frequenz des reflektierten Signals, die sich aufgrund einer Laufzeit durch den SAW-Sensor 10 ergeben, um die Abstandsinformationen zu erhalten.

2. Vorrichtung gemäß Anspruch 1, bei der die Erregungseinrichtung und die Empfangseinrichtung gemeinsam durch einen einzigen Interdigitalwandler (14) gebildet sind.

3. Vorrichtung gemäß Anspruch 2, die ferner einen Sende/Empfangsschalter (106) aufweist, der einen Eingangs/Ausgangsanschluss, einen Eingang und einen Ausgang aufweist, wobei der Eingangs/Ausgangsanschluss mit dem Interdigitalwandler (14), der Eingang mit der Einrichtung (102) zum Anlegen und der Ausgang mit der Einrichtung (104) zum Empfangen und Bestimmen verbunden ist, und wobei der Sende/Empfangsschalter (106) ausgebildet ist, um in einem Sendebetrieb den Eingangs/Ausgangsanschluss mit dem Eingang und in einem Empfangsbetrieb den Eingangs/Ausgangsanschluss mit dem Ausgang zu verbinden.

4. Vorrichtung gemäß einem der Ansprüche 1 bis 3, bei der das Zeitsignal einen Gemeinschaftspuls mit dem Träger der ersten Frequenz und dem Träger der zweiten Frequenz und das reflektierte Signal einen reflektierter Gemeinschaftsantwortpuls mit dem Träger der ersten Frequenz und dem Träger der zweiten Frequenz aufweist.

5. Vorrichtung gemäß einem der Ansprüche 1 bis 4, bei der die Einrichtung (102) zum Anlegen ferner folgende Merkmale aufweist:

einen ersten Referenzoszillator (114) zum Erzeugen eines ersten Oszillatorsignals mit der ersten Frequenz und einen zweiten Referenzoszillator (116) zum Erzeugen eines zweiten Oszillatorsignals mit der zweiten Frequenz;

einen Addierer (118) zum Addieren des ersten und des zweiten Oszillatorsignals zu einem Zwei-Ton-Signal; und

einen Pulsmodulator (120) zum pulsartigen Anlegen des Zwei-Ton-Signals an den SAW-Sensor (10).

6. Vorrichtung gemäß einem der Ansprüche 1 bis 3, bei der das Zeitsignal zwei Einzelpulse aufweist, von denen ein erster den Träger der ersten Frequenz und der zweite den Träger der zweiten Frequenz aufweist, und das reflektierte Signal zwei reflektierte Antwortpulse aufweist, von denen ein erster den Träger der ersten Frequenz und der zweite den Träger der zweiten Frequenz aufweist.

7. Vorrichtung gemäß einem der Ansprüche 1 bis 3 oder 6, bei der die Einrichtung (102) zum Anlegen ferner folgende Merkmale aufweist:

einen Referenzoszillator zum Erzeugen eines ersten Oszillatorsignals mit der ersten Frequenz und einen zweiten Referenzoszillator zum Erzeugen eines zweiten Oszillatorsignals mit der zweiten Frequenz;

eine Pulsmodulatoreinrichtung zum sequentiellen und pulsartigen Anlegen zunächst eines und dann des anderen des ersten und des zweiten Oszillatorsignals an den SAW-Sensor (10).

8. Vorrichtung gemäß einem der Ansprüche 1 bis 7, bei der die Einrichtung (104) zum Empfangen und Bestimmen folgendes Merkmal aufweist:

eine Einrichtung (126, 128) zum Mischen des reflektierten Signals mit einem ersten Mischsignal der ersten Frequenz, um ein Informationen betreffend die erste Phasenänderung aufweisendes Signal zu erhalten, und zum Mischen des reflektierten Signals mit einem zweiten Mischsignal der zweiten Frequenz, um ein Informationen über die zweite Phasenänderung aufweisendes Signal zu erhalten.

9. Vorrichtung gemäß Anspruch 8, bei dem das erste Mischsignal einem ersten Oszillatorsignal und das zweite Mischsignal einem zweiten Oszillatorsignal entspricht, wobei das Zeitsignal die Oszillatorsignale als den Träger der ersten Frequenz und den Träger der zweiten Frequenz aufweist.

10. Vorrichtung gemäß Anspruch 8 oder 9, bei der die Einrichtung (104) zum Empfangen und Bestimmen ferner folgende Merkmale aufweist:

ein erstes Tiefpassfilter (130) zum Tiefpassfiltern des Informationen über die erste Phasenänderung aufweisenden Signals, um ein die erste Phasenänderung anzeigendes Signal zu erhalten; und

ein zweites Tiefpassfilter (132) zum Tiefpassfiltern des Informationen über die zweite Phasenlage aufweisenden Signals, um ein die zweite Phasenänderung anzeigendes Signal zu erhalten.

11. Vorrichtung gemäß einem der Ansprüche 2 bis 10, die ferner folgendes Merkmal aufweist:

eine Einrichtung zum Berechnen des Abstands zwischen dem Reflektor (16) und dem Interdigitalwandler (14) auf der Basis der ersten und der zweiten Phasenänderung.

12. Vorrichtung gemäß Anspruch 11, bei der die Einrichtung (104) zum Empfangen und Bestimmen der Berechnung des Abstands d folgende Formel zugrunde legt:

$$d = \frac{(\varphi_2 - \varphi_1) \cdot v_{ph}}{2\pi \cdot (f_2 - f_1)},$$

wobei $f_2 > f_1$, und

wobei $\varphi_1$ die erste Phasenänderung, $\varphi_2$ die zweite Phasenänderung, $v_{ph}$ die Phasengeschwindigkeit auf dem SAW-Sensor (10), $f_1$ die erste Frequenz und $f_2$ die zweite Frequenz anzeigt.

13. Vorrichtung zum Anpassen einer Auswerteschaltung, die mit einem SAW-Sensor (10) koppelbar ist, an den SAW-Sensor (10), wobei der SAW-Sensor (10) einen Reflektor (16), eine Erregungseinrichtung (14) und eine Empfangseinrichtung (14) aufweist, und die Auswerteschaltung angepasst ist, um anhand einer Phasenänderung eines reflektierten Antwortsignals an der Empfangseinrichtung (14) aufgrund einer Laufzeit durch den SAW-Sensor (10) auf das Anlegen eines Zeitsignals mit einem Träger einer vorbestimmten Frequenz hin basierend auf einem physikalischen Zusammenhang zwischen einer relativen Dehnung des SAW-Sensors (10) und einem Messwert auf den Messwert zu schließen, mit

einer Vorrichtung zum Bestimmen von Abstandsinformationen des SAW-Sensors gemäß einem der Ansprüche 1 bis 12; und

einer Einrichtung zum Einstellen der Auswerteschaltung abhängig von den Abstandsinformationen.

14. Vorrichtung gemäß Anspruch 13, bei der die Vorrichtung zum Bestimmen eine Vorrichtung zum Bestimmen nach Anspruch 11 oder 12 ist, und bei der die Auswerteschaltung angepasst ist, um bei Rückschluss auf den Messwert eine Division durch einen Divisionswert durchzuführen, wobei die Einrichtung zum Einstellen angepasst ist, um den Divisionswert gemäß dem den Abstand anzeigenden Signal einzustellen.

15. Vorrichtung zum Bestimmen einer Nicht-Idealität einer I/Q-Modulationseinrichtung (300), die mit einem SAW-Sensor (10) koppelbar ist, das einen Reflektor (16), eine Erregungseinrichtung (14) und eine Empfangseinrichtung (14) aufweist, mit

einer Einrichtung (302) zum Anlegen eines Zeitsignals mit einem Träger einer ersten Frequenz und einem Träger einer zweiten Frequenz an den SAW-Sensor (10) über die Erregungseinrichtung (14), wobei die erste und die zweite Frequenz unterschiedlich sind, wobei die Einrichtung (302) zum Anlegen derart angepasst ist, dass die erste und die zweite Frequenz so einstellbar sind, dass eine aufgrund einer Laufzeit durch den SAW-Sensor (10) bewirkte Phasenänderung eines Trägers der ersten Frequenz eines durch die Empfangseinrichtung (14) empfangenen reflektierten Signals zu einer aufgrund der Laufzeit durch den SAW-Sensor (10) bewirkten Phasenänderung eines Trägers der zweiten Frequenz eine vorbestimmte Phasenbeziehung aufweist,

wobei die I/Q-Modulationseinrichtung angepasst ist, um für den Träger mit der ersten Frequenz des reflektierten Signals eine erste Inphasen-Komponente und eine erste Quadraturkomponente und für den Träger der zweiten Frequenz des reflektierten Signals eine zweite Inphasenkomponente und eine zweite Quadratur-Komponente zu erzeugen; und

einer Einrichtung zum Bestimmen der Nicht-Idealität der I/Q-Modulationseinrichtung (300) basierend auf zumindest einer der ersten Inphasen- und der ersten Quadratur-Komponente und zumindest einer der zweiten Inphasen- und der zweiten Quadratur-Komponente.

16. Vorrichtung gemäß Anspruch 15, bei der die Erregungseinrichtung die Empfangseinrichtung gemeinsam durch einen einzigen Interdigitalwandler (14) gebildet sind.

17. Vorrichtung gemäß Anspruch 16, die ferner folgendes Merkmal aufweist:

eine Einrichtung zum Einstellen einer der ersten Frequenz und der zweiten Frequenz abhängig von der anderen derart, dass folgende Gleichung erfüllt ist:

$$f_1 - f_2 = \frac{2n - 1}{4} \frac{v_{ph}}{d}$$

wobei $n$ eine Ganzzahl größer 1, $d$ der Abstand zwischen dem Interdigitalwandler (14) und dem Reflektor (16), $v_{ph}$ die Phasengeschwindigkeit auf dem SAW-Sensor (10), $f_1$ die erste Frequenz und $f_2$ die zweite Frequenz ist.

18. Vorrichtung gemäß Anspruch 17, bei der die Einrichtung zum Bestimmen angepasst ist, um das I/Q-Missverhältnis der I/Q-Modulationseinrichtung durch Division der ersten Quadraturkomponente durch die zweite Inphasen-Komponente oder der Division der zweiten Quadraturkomponente durch die erste Inphasen-Komponente zu berechnen.

**19.** Vorrichtung gemäß Anspruch 16, die ferner folgendes Merkmal aufweist:

eine Einrichtung zum Einstellen einer der ersten Frequenz und der zweiten Frequenz abhängig von der anderen derart, dass folgende Gleichung erfüllt ist:

$$f_1 - f_2 = \frac{n - \frac{1}{2}}{4} \frac{v_{ph}}{d}$$

wobei n eine Ganzzahl größer 1, d der Abstand zwischen dem Interdigitalwandler (14) und dem Reflektor (16), $v_{ph}$ die Phasengeschwindigkeit auf dem SAW-Sensor (10), $f_1$ die erste Frequenz und $f_2$ die zweite Frequenz ist.

**20.** Vorrichtung gemäß Anspruch 19, bei der die Einrichtung zum Bestimmen angepasst ist, um den Inphasenoffset durch Subtraktion der ersten und der zweiten Inphasen-Komponente zu berechnen.

**21.** Vorrichtung gemäß Anspruch 19 oder 20, bei der die Einrichtung zum Bestimmen angepasst ist, um den Quadratur-Offset durch Subtraktion der ersten und der zweiten Quadratur-Komponente zu berechnen.

**22.** Vorrichtung gemäß einem der Ansprüche 15-21, bei der die I/Q-Modulationseinrichtung ein I/Q-Demodulator ist.

**23.** Vorrichtung zum Kalibrieren einer I/Q-Modulationseinrichtung, die mit einem SAW-Sensor (10) koppelbar ist, das einen Reflektor, eine Erregungseinrichtung und eine Empfangseinrichtung aufweist, mit
einer Vorrichtung zum Bestimmen einer Nicht-Idealität der I/Q-Modulationseinrichtung gemäß einem der Ansprüche 15-22; und
einer Einrichtung zum Kompensieren des I/Q-Missverhältnisses, des Inphasen- und/oder des Quadratur-Offsets abhängig von der bestimmten Nicht-Idealität.

**24.** Verfahren zum Bestimmen von Abstandinformationen eines SAW-Sensors (10), der einen Reflektor (16), eine Erregungseinrichtung (14) und eine Empfangseinrichtung (14) aufweist, mit
Anlegen (102) eines Zeitsignals mit einem Träger einer ersten Frequenz und einem Träger einer zweiten Frequenz an den SAW-Sensor (10) über die Erregungseinrichtung (14), wobei die erste und die zweite Frequenz unterschiedlich sind;
Empfangen (104) eines reflektierten Signals mit einem Träger der ersten und einem Träger der zweiten Frequenz an der Empfangseinrichtung (14) und zum Bestimmen einer ersten Phasenänderung des Trägers der ersten Frequenz des reflektierten Signals und einer zweiten Phasenänderung des Trägers der zweiten Frequenz des reflektierten Signals, die sich aufgrund einer Laufzeit durch den SAW-Sensor 10 ergeben, um die Abstandsinformationen zu erhalten.

**25.** Verfahren zum Anpassen einer Auswerteschaltung, die mit einem SAW-Sensor (10) koppelbar ist, an den SAW-Sensor (10), wobei der SAW-Sensor (10) einen Reflektor (16), eine Erregungseinrichtung (14) und eine Empfangseinrichtung (14) aufweist, und die Auswerteschaltung angepasst ist, um anhand einer Phasenänderung eines reflektierten Antwortsignals an der Empfangseinrichtung (14) aufgrund einer Laufzeit durch den SAW-Sensor (10) auf das Anlegen eines Zeitsignals mit einem Träger einer vorbestimmten Frequenz hin basierend auf einem physikalischen Zusammenhang zwischen einer relative Dehnung des SAW-Sensors (10) und einem Messwert auf den Messwert zu schließen, mit
Bestimmen von Abstandsinformationen des SAW-Sensors gemäß Anspruch 24; und
Einstellen der Auswerteschaltung abhängig von den Abstandsinformationen.

**26.** Verfahren zum Bestimmen einer Nicht-Idealität einer I/Q-Modulationseinrichtung (300), die mit einem SAW-Sensor (10) koppelbar ist, das einen Reflektor (16), eine Erregungseinrichtung (14) und eine Empfangseinrichtung (14) aufweist, mit
Anlegen (302) eines Zeitsignals mit einem Träger einer ersten Frequenz und einem Träger einer zweiten Frequenz an den SAW-Sensor (10) über die Erregungseinrichtung (14), wobei die erste und die zweite Frequenz unterschiedlich sind, wobei das Anlegen derart angepasst ist, dass die erste und die zweite Frequenz so einstellbar sind, dass eine aufgrund einer Laufzeit durch den SAW-Sensor (10) bewirkte Phasenänderung eines Trägers der ersten Frequenz eines durch die Empfangseinrichtung (14) empfangenen reflektierten Signals zu einer aufgrund der Laufzeit durch den SAW-Sensor (10) bewirkten Phasenänderung eines Trägers der zweiten Frequenz eine vorbestimmte Phasenbeziehung aufweist,

wobei die I/Q-Modulationseinrichtung angepasst ist, um für den Träger mit der ersten Frequenz des reflektierten Signals eine erste Inphasen-Komponente und eine erste Quadraturkomponente und für den Träger der zweiten Frequenz des reflektierten Signals eine zweite Inphasenkomponente und eine zweite Quadratur-Komponente zu erzeugen; und

Bestimmen der Nicht-Idealität der I/Q-Modulationseinrichtung (300) basierend auf zumindest einer der ersten Inphasen- und der ersten Quadratur-Komponente und zumindest einer der zweiten Inphasen- und der zweiten Quadratur-Komponente.

27. Verfahren zum Kalibrieren einer I/Q-Modulationseinrichtung, die mit einem SAW-Sensor (10) koppelbar ist, das einen Reflektor, eine Erregungseinrichtung und eine Empfangseinrichtung aufweist, mit

Bestimmen einer Nicht-Idealität der I/Q-Modulationseinrichtung gemäß Anspruch 26; und

Kompensieren des I/Q-Missverhältnisses, des Inphasen- und/oder des Quadratur-Offsets abhängig von der bestimmten Nicht-Idealität.

28. Computer-Programm mit einem Programmcode zur Durchführung eines der Verfahren nach Anspruch 24, 25, 26 oder 27, wenn das Computer-Programm auf einem Computer abläuft.

**Claims**

1. Device for determining distance information of an SAW sensor (10), comprising a reflector (16), an excitation means (14) and a receiving means (14), comprising:

   means (102) for applying a time signal with a carrier of a first frequency and a carrier of a second frequency to the SAW sensor (10) via the excitation means (14), wherein the first and the second frequency are different;

   means (104) for receiving a reflected signal with a carrier of the first and a carrier of the second frequency at the receiving means (14) and for determining a first phase change of the carrier of the first frequency of the reflected signal and a second phase change of the carrier of the second frequency of the reflected signal, resulting due to a run time by the SAW sensor (10), in order to obtain the distance information.

2. Device according to claim 1, wherein the excitation means and the receiving means are formed together by one single interdigital converter (14).

3. Device according to claim 2, further comprising a transmitting/receiving switch (106) comprising an input/output terminal, an input and an output, wherein the input/output terminal is connected to the interdigital converter (14), the input is connected to means (102) for applying and the output is connected to means (104) for receiving and determining, and wherein the transmitting/receiving circuit (106) is implemented in order to connect in a transmission operation the input/output terminal to the input and in a receiving operation the input/output terminal to the output.

4. Device according to one of claims 1 to 3, wherein the time signal comprises a common pulse with the carrier of the first frequency and the carrier of the second frequency and the reflected signal comprises a reflected common response pulse with the carrier of the first frequency and the carrier of the second frequency.

5. Device according to one of claims 1 to 4, wherein means (102) for applying further comprises:

   a first reference oscillator (114) for generating a first oscillator signal with the first frequency and a second reference oscillator (116) for generating a second oscillator signal with the second frequency;

   an adder (118) for adding the first and the second oscillator signal to a two-tone-signal; and

   a pulse modulator (120) for a pulse-type application of the two-tone-signal to the SAW sensor (10).

6. Device according to one of claims 1 to 3, wherein the time signal comprises two individual pulses of which a first one comprises the carrier of the first frequency and the second one comprises the carrier of the second frequency, and the reflected signal comprises two reflected response pulses of which a first one comprises the carrier of the first frequency and the second one comprises the carrier of the second frequency.

7. Device according to one of claims 1 to 3 or 6, wherein means (102) for applying further comprises:

   a reference oscillator for generating a first oscillator signal with the first frequency and a second reference oscillator for generating a second oscillator signal with the second frequency;

   a pulse modulator means for a sequential and pulse-type application first of one and then of the other of the first and the second oscillator signal to the SAW sensor (10).

8. Device according to one of claims 1 to 7, wherein means (104) for receiving and determining comprises:

   means (126, 128) for mixing the reflected signal with a first mix signal of the first frequency in order to obtain a signal comprising information regarding the first phase change, and for mixing the reflected signal with a second mixing signal of the second frequency in order to obtain a signal containing information about the second phase change.

9. Device according to claim 8, wherein the first mixing signal corresponds to a first oscillator signal and the second mixing signal corresponds to a second oscillator signal, wherein the time signal comprises the oscillator signals as the carrier of the first frequency and the carrier of the second frequency.

10. Device according to claim 8 or 9, wherein means (104) for receiving and determining further comprises:

   a first low-pass filter (130) for low-pass filtering the signal containing information about the first phase change in order to obtain a signal indicating the first phase change; and

   a second low-pass filter (132) for low-pass filtering the signal containing information about the second phase position in order to obtain a signal indicating the second phase change.

11. Device according to one of claims 2 to 10, further comprising:

   means for calculating the distance between the reflector (16) and the interdigital converter (14) on the basis of the first and the second phase change.

12. Device according to claim 11, wherein means (104) for receiving and determining bases the calculation of the distance d on the following formula:

$$d = \frac{(\varphi 2 - \varphi 1) \cdot v_{ph}}{2\pi \cdot (f_2 - f_1)},$$

wherein $f_2 > f_1$, and
wherein $\varphi_1$ is the first phase change, $\varphi_2$ is the second phase change, $v_{ph}$ is the phase speed on the SAW sensor (10), $f_1$ is the first frequency and $f_2$ is the second frequency.

13. Device for adjusting an evaluation circuit that may be coupled to an SAW sensor (10) to the SAW sensor (10), wherein the SAW sensor (10) comprises a reflector (16), an excitation means (14) and a receiving means (14) and wherein the evaluation circuit is adjusted in order to conclude the measurement value using a phase change of a reflected response signal at the receiving means (14) based on a run time by the SAW sensor (10) upon applying a time signal with a carrier of a predetermined frequency based on a physical connection between a relative expansion of the SAW sensor (10) and a measurement value, with
a device for determining distance information of the SAW sensor according to one of claims 1 to 12; and
means for setting the evaluation circuit depending on the distance information.

14. Device according to claim 13, wherein the device for determining is a device for determining according to claim 11 or 12, and wherein the evaluation circuit is adjusted to perform a division by a division value when concluding to the measurement value, wherein means for setting is adjusted in order to set the division value according to the signal indicating the distance.

**15.** Device for determining a non-ideality of an I/Q modulation means (300) that may be coupled to an SAW sensor (10), comprising a reflector (16), an excitation means (14) and a receiving means (14) having
means (302) for applying a time signal with a carrier of a first frequency and a carrier of a second frequency to the SAW sensor (10) via the excitation means (14), wherein the first and the second frequency are different, wherein means (302) for applying is adjusted such that the first and the second frequency may be set so that a phase change, caused based on a run time by the SAW sensor (10), of a carrier of the first frequency of a reflected signal received by the receiving means (14) to a phase change, caused based on the run time by the SAW sensor (10), of a carrier of the second frequency comprises a predetermined phase relation,
wherein the I/Q modulation means is adjusted to generate for the carrier with the first frequency of the reflected signal a first in-phase component and a first quadrature component and to generate for the carrier of the second frequency of the reflected signal a second in-phase component and a second quadrature component; and
means for determining the non-ideality of the I/Q modulation means (300) based on at least one of the first in-phase and the first quadrature component and at least one of the second in-phase and the second quadrature component.

**16.** Device according to claim 15, wherein the excitation means and the receiving means are together formed by one single interdigital converter (14).

**17.** Device according to claim 16, further comprising:

means for setting one of the first frequency and the second frequency depending on the other one such that the following equation is fulfilled:

$$f_1 - f_2 = \frac{2n - 1}{4} \frac{v_{ph}}{d}$$

wherein n is an integer larger than 1, d is the distance between the interdigital converter (14) and the reflector (16), $v_{ph}$ is the phase speed on the SAW sensor (10), $f_1$ is the first frequency and $f_2$ is the second frequency.

**18.** Device according to claim 17, wherein means for determining is adjusted to calculate the I/Q disproportion of the I/Q modulation means by a division of the first quadrature component by the second in-phase component or the division of the second quadrature component by the first in-phase component.

**19.** Device according to claim 16, further comprising:

means for setting one of the first frequency and the second frequency depending on the other one such that the following equation holds true.

$$f_1 - f_2 = \frac{n - 1/2}{4} \frac{v_{ph}}{d}$$

wherein n is an integer larger than 1, d is the distance between the interdigital converter (14) and the reflector (16), $v_{ph}$ is the phase speed on the SAW sensor (10), $f_1$ is the first frequency and $f_2$ is the second frequency.

**20.** Device according to claim 19, wherein means for determining is adjusted to calculate the in-phase offset by a subtraction of the first and the second in-phase component.

**21.** Device according to claim 19 or 20, wherein means for determining is adjusted in order to calculate the quadrature offset by subtraction of the first and second quadrature component.

**22.** Device according to one of claims 15 to 21, wherein the I/Q modulation means is an I/Q demodulator.

**23.** Device for calibrating an I/Q modulation means that may be coupled to an SAW sensors (10), comprising a reflector, an excitation means and a receiving means, having

a device for determining a non-ideality of the I/Q modulation means according to one of claims 15 to 22; and

means for compensating the I/Q disproportion, the in-phase and/or the quadrature offset depending on the determined non-ideality.

**24.** Method for determining distance information of an SAW sensor (10) comprising a reflector (16), an excitation means (14) and a receiving means (14), comprising

applying (102) a time signal with a carrier of a first frequency and a carrier of a second frequency to the SAW sensor (10) via the excitation means (14), wherein the first and the second frequency are different;

receiving (104) a reflected signal with a carrier of the first and a carrier of the second frequency at the receiving means (14) and for determining a first phase change of the carrier of the first frequency of the reflected signal and a second phase change of the carrier of the second frequency of the reflected signal resulting due to a run time by the SAW sensor (10) to obtain the distance information.

**25.** Method for adjusting an evaluation circuit, that may be coupled to an SAW sensor (10), to the SAW sensor (10), wherein the SAW sensors (10) comprises a reflector (16), an excitation means (14) and a receiving means (14), and the evaluation circuit is adjusted in order to conclude the measurement value using a phase change of a reflected response signal at the receiving means (14) based on a run time by the SAW sensor (10) upon applying a time signal with a carrier of a predetermined frequency based on a physical connection between a relative extension of the SAW sensor (10) and a measurement value, comprising

determining distance information of the SAW sensor according to claim 24; and

setting the evaluation circuit depending on the distance information.

**26.** Method for determining a non-ideality of an I/Q modulation means (300), that may be coupled to an SAW sensor (10), comprising a reflector (16), an excitation means (14) and a receiving means (14), comprising

applying (302) a time signal with a carrier of a first frequency and a carrier of a second frequency to the SAW sensor (10) via the excitation means (14), wherein the first and the second frequency are different, wherein the applying is adjusted such that the first and the second frequency may be set so that a phase change, caused based on a run time by the SAW sensor (10), of a carrier of the first frequency of a reflected signal received by the receiving means (14) to a phase change, caused based on the run time by the SAW sensor (10), of a carrier of the second frequency comprises a predetermined phase relation,

wherein the I/Q modulation means is adjusted to generate for the carrier with the first frequency of the reflected signal a first in-phase component and a first quadrature component and to generate for the carrier of the second frequency of the reflected signal a second in-phase component and a second quadrature component; and

determining the non-ideality of the I/Q modulation means (300) based on at least one of the first in-phase and the first quadrature component and at least one of the second in-phase and the second quadrature component.

**27.** Method for calibrating an I/Q modulation means that may be coupled to an SAW sensor (10), comprising a reflector, an excitation means and a receiving means, comprising

determining a non-ideality of the I/Q modulation means according to claim 26; and

compensating the I/Q disproportion, the in-phase and/or the quadrature offset depending on the determined non-ideality.

**28.** Computer program having a program code for performing one of the methods of claim 24, 25, 26 or 27, when the computer program runs on a computer.

**Revendications**

**1.** Dispositif pour déterminer les informations de distance d'un capteur d'OAS (10) présentant un réflecteur (16), un dispositif d'activation (14) et un dispositif de réception (14), avec

un dispositif (102) destiné à appliquer un signal dans le temps avec une porteuse à une première fréquence et une porteuse à une deuxième fréquence sur le capteur d'OAS (10) par l'intermédiaire du dispositif d'activation (14), la première et la deuxième fréquence étant différentes ;

un dispositif (104) destiné à recevoir un signal réfléchi avec une porteuse à la première fréquence et une porteuse à la deuxième fréquence au dispositif de réception (14) et pour déterminer un premier déphasage de la porteuse à la première fréquence du signal réfléchi et un deuxième déphasage de la porteuse à la deuxième fréquence du signal réfléchi qui se produisent par suite d'un temps de passage dans le capteur d'OAS 10, pour obtenir les informations de distance.

2. Dispositif selon la revendication 1, dans lequel le dispositif d'activation et le dispositif de réception sont formés ensemble par un seul convertisseur interdigital (14).

3. Dispositif selon la revendication 2, présentant, par ailleurs, un commutateur de transmission/réception (106) présentant une connexion d'entrée/sortie, une entrée et une sortie, la connexion d'entrée/sortie étant reliée au convertisseur interdigital (14), l'entrée au dispositif (102) pour appliquer et la sortie au dispositif (104) pour recevoir et déterminer, et le commutateur de transmission/réception (106) étant réalisé pour relier, en fonctionnement de transmission, la connexion d'entrée/sortie à l'entrée et, en fonctionnement de réception, la connexion d'entrée/sortie à la sortie.

4. Dispositif selon l'une des revendications 1 à 3, dans lequel le signal dans le temps présente une impulsion commune avec la porteuse à la première fréquence et la porteuse à la deuxième fréquence et le signal réfléchi présente une impulsion de réponse commune réfléchie avec la porteuse à la première fréquence et la porteuse à la deuxième fréquence.

5. Dispositif selon l'une des revendications 1 à 4, dans lequel le dispositif (102) destiné à appliquer présente, par ailleurs, les caractéristiques suivantes :

un premier oscillateur de référence (114) destiné à générer un premier signal d'oscillateur à la première fréquence et un deuxième oscillateur de référence (116) destiné à générer un deuxième signal d'oscillateur à la deuxième fréquence ;
un additionneur (118) destiné à additionner le premier et le deuxième signal d'oscillateur à un signal bitonal ; et
un modulateur d'impulsion (120) destiné à appliquer sous forme d'impulsion le signal bitonal au capteur d'OAS (10).

6. Dispositif selon l'une des revendications 1 à 3, dans lequel le signal dans le temps présente deux impulsions individuelles, dont une première présente la porteuse à la première fréquence et la deuxième présente la porteuse à la deuxième fréquence, et le signal réfléchi présente deux impulsions de réponse réfléchies dont la première présente la porteuse à la première fréquence et la deuxième présente la porteuse à la deuxième fréquence.

7. Dispositif selon l'une des revendications 1 à 3 ou 6, dans lequel le dispositif (102) destiné à appliquer présente, par ailleurs, les caractéristiques suivantes :

un oscillateur de référence destiné à générer un premier signal d'oscillateur à la première fréquence et un deuxième oscillateur de référence destiné à générer un deuxième signal d'oscillateur à la deuxième fréquence ;
un dispositif modulateur d'impulsion destiné à appliquer de manière séquentielle et sous forme d'impulsion tout d'abord l'un et puis l'autre parmi le premier et le deuxième signal d'oscillateur au capteur d'OAS (10).

8. Dispositif selon l'une des revendications 1 à 7, dans lequel le dispositif (104) destiné à recevoir et à déterminer présente la caractéristique suivante :

un dispositif (126, 128) destiné à mélanger le signal réfléchi avec un premier signal mixte à la première fréquence, pour obtenir des informations relatives au signal présentant le premier déphasage, et à mélanger le signal réfléchi avec un deuxième signal mixte à la deuxième fréquence, pour obtenir des informations sur le signal présentant le deuxième déphasage.

9. Dispositif selon la revendication 8, dans lequel le premier signal mixte correspond à un premier signal d'oscillateur et le deuxième signal mixte correspond à un deuxième signal d'oscillateur, le signal dans le temps présentant les signaux d'oscillateur comme porteuse à la première fréquence et porteuse à la deuxième fréquence.

10. Dispositif selon la revendication 8 ou 9, dans lequel le dispositif (104) destiné à recevoir et à déterminer présente, par ailleurs, les caractéristiques suivantes :

un premier filtre passe-bas (130) destiné à filtrer passe-bas les informations sur le signal présentant le premier déphasage, pour obtenir un signal indiquant le premier déphasage ; et

un deuxième filtre passe-bas (132) destiné à filtrer passe-bas les informations sur le signal présentant la deuxième position de phase, pour obtenir un signal indiquant le deuxième déphasage.

**11.** Dispositif selon l'une des revendications 2 à 10, présentant, par ailleurs, la caractéristique suivante :

un dispositif destiné à calculer la distance entre le réflecteur (16) et le convertisseur interdigital (14) sur base du premier et du deuxième déphasage.

**12.** Dispositif selon la revendication 11, dans lequel le dispositif (104) destiné à recevoir et déterminer base le calcul de la distance d sur la formule suivante :

$$d = \frac{(\varphi_1 - \varphi_2) \cdot v_{ph}}{2\pi \cdot (f_2 - f_1)}$$

$f_2 > f_1$, et

$\varphi_1$ indiquant le premier déphasage, $\varphi_2$ le deuxième déphasage, $v_{ph}$ la vitesse de phase sur le capteur d'OAS (10), $f_1$ la première fréquence et $f_2$ la deuxième fréquence.

**13.** Dispositif pour adapter au capteur d'OAS (10) un circuit d'évaluation qui peut être couplé à un capteur d'OAS (10), le capteur d'OAS (10) présentant un réflecteur (16), un dispositif d'activation (14) et un dispositif de réception (14), et le circuit d'évaluation étant adapté pour conclure une valeur de mesure à l'aide d'un déphasage d'un signal de réponse réfléchi au dispositif de réception (14) par suite d'un temps de passage dans le capteur d'OAS (10) en vue de l'application d'un signal dans le temps avec une porteuse à une fréquence prédéterminée sur base d'un rapport physique entre une extension relative du capteur d'OAS (10) et une valeur de mesure, avec

un dispositif destiné à déterminer des informations de distance du capteur d'OAS selon l'une des revendications 1 à 12 ; et

un dispositif destiné à régler le circuit d'évaluation en fonction des informations de distance.

**14.** Dispositif selon la revendication 13, dans lequel le dispositif destiné à déterminer est un dispositif pour déterminer selon la revendication 11 ou 12, et dans lequel le circuit d'évaluation est adapté pour effectuer, avec renvoi à la valeur de mesure, une division par une valeur de division, le dispositif destiné à régler étant adapté pour régler la valeur de division selon le signal indiquant la distance.

**15.** Dispositif pour déterminer une non-idéalité d'un dispositif de modulation I/Q (300) pouvant être couplé à un capteur d'OAS (10) présentant un réflecteur (16), un dispositif d'activation (14) et un dispositif de réception (14), avec

un dispositif (302) destiné à appliquer un signal dans le temps avec une porteuse à une première fréquence et une porteuse à une deuxième fréquence au capteur d'OAS (10) par l'intermédiaire du dispositif d'activation (14), la première et la deuxième fréquence étant différentes, le dispositif (302) destiné à appliquer étant adaptée de sorte que la première et la deuxième fréquence puissent être réglées de sorte qu'un déphasage, entraîné par suite d'un temps de passage dans le capteur d'OAS (10), d'une porteuse à la première fréquence d'un signal réfléchi reçu par le dispositif de réception (14) présente, par rapport à un déphasage, entraîné par suite d'un temps de passage dans le capteur d'OAS (10), d'une porteuse à la deuxième fréquence, un rapport de phase prédéterminé,

le dispositif de modulation I/Q étant adapté pour générer, pour la porteuse à la première fréquence du signal réfléchi, une première composante en phase et une première composante de quadrature et, pour la porteuse à la deuxième fréquence du signal réfléchi, une deuxième composante en phase et une deuxième composante de quadrature ; et

un dispositif destiné à déterminer la non-idéalité du dispositif de modulation I/Q (300) sur base d'au moins l'une parmi la première composante en phase et la première composante de quadrature et d'au moins l'une parmi la deuxième composante en phase et la deuxième composante de quadrature.

**16.** Dispositif selon la revendication 15, dans lequel le dispositif d'activation et le dispositif de réception sont constitués ensemble par un seul convertisseur interdigital (14).

**17.** Dispositif selon la revendication 16, présentant, par ailleurs, la caractéristique suivante :

un dispositif destiné à régler l'une parmi la première fréquence et la deuxième fréquence en fonction de l'autre, de sorte que l'équation suivante soit remplie :

$$f_1 - f_2 = \frac{2n - 1}{4} \frac{v_{ph}}{d}$$

n étant un nombre entier supérieur à 1, d la distance entre le convertisseur interdigital (14) et le réflecteur (16), $v_{ph}$ la vitesse de phase sur le capteur d'OAS (10), $f_1$ la première fréquence et $f_2$ la deuxième fréquence.

**18.** Dispositif selon la revendication 17, dans lequel le dispositif destiné à déterminer est adapté pour calculer la disparité I/Q du dispositif de modulation I/Q par division de la première composante de quadrature par la deuxième composante en phase ou par division de la deuxième composante de quadrature par la première composante en phase.

**19.** Dispositif selon la revendication 16, présentant, par ailleurs, la caractéristique suivante :

un dispositif destiné à régler l'une parmi la première fréquence et la deuxième fréquence en fonction de l'autre, de sorte que l'équation suivante soit remplie :

$$f_1 - f_2 = \frac{n - \frac{1}{2}}{4} \frac{v_{ph}}{d}$$

n étant un nombre entier supérieur à 1, d la distance entre le convertisseur interdigital (14) et le réflecteur (16), $v_{ph}$ la vitesse de phase sur le capteur d'OAS (10), $f_1$ la première fréquence et $f_2$ la deuxième fréquence.

**20.** Dispositif selon la revendication 19, dans lequel le dispositif destiné à déterminer est adapté pour calculer le décalage en phase par soustraction de la première et de la deuxième composante en phase.

**21.** Dispositif selon la revendication 19 ou 20, dans lequel le dispositif destiné à déterminer est adapté pour calculer le décalage de quadrature par soustraction de la première et de la deuxième composante de quadrature.

**22.** Dispositif selon l'une des revendications 15 à 21, dans lequel le dispositif de modulation I/Q est un démodulateur I/Q.

**23.** Dispositif pour étalonner un dispositif de modulation I/Q pouvant être couplé à un capteur d'OAS (10) présentant un réflecteur, un dispositif d'activation et un dispositif de réception, avec
un dispositif destiné à déterminer une non-idéalité du dispositif de modulation I/Q selon l'une des revendications 15 à 22 ; et
un dispositif destiné à compenser la disparité I/Q, du décalage en phase et/ou du décalage de quadrature en fonction de la non-idéalité déterminée.

**24.** Procédé pour déterminer les informations de distance d'un capteur d'OAS (10), présentant un réflecteur (16), un dispositif d'activation (14) et un dispositif de réception (14), avec
appliquer (102) un signal dans le temps avec un porteuse à une première fréquence et une porteuse à une deuxième fréquence sur le capteur d'OAS (10) par l'intermédiaire du dispositif d'activation (14), la première et la deuxième fréquence étant différentes ;
recevoir (104) un signal réfléchi avec une porteuse à la première fréquence et une porteuse à la deuxième fréquence au dispositif de réception (14) et déterminer un premier déphasage de la porteuse à la première fréquence du signal réfléchi et un deuxième déphasage de la porteuse à la deuxième fréquence du signal réfléchi qui se produisent par suite d'un temps de passage dans le capteur d'OAS (10), pour obtenir les informations de distance.

**25.** Procédé pour adapter au capteur d'OAS (10) un circuit d'évaluation pouvant être couplé à un capteur d'OAS (10), le capteur d'OAS (10) présentant un réflecteur (16), un dispositif d'activation (14) et un dispositif de réception (14), et le circuit d'évaluation étant adapté pour conclure une valeur de mesure à l'aide d'un déphasage d'un signal de réponse réfléchi au dispositif de réception (14) par suite d'un temps de passage dans le capteur d'OAS (10) en vue de l'application d'un signal dans le temps avec une porteuse à une fréquence prédéterminée sur base d'un rapport physique entre une extension relative du capteur d'OAS (10) et une valeur de mesure, avec

déterminer des informations de distance du capteur d'OAS selon la revendication 24 ; et

régler le circuit d'évaluation en fonction des informations de distance.

26. Procédé pour déterminer une non-idéalité d'un dispositif de modulation I/Q (300) pouvant être couplé à un capteur d'OAS (10) présentant un réflecteur (16), un dispositif d'activation (14) et un dispositif de réception (14), avec

appliquer (302) un signal dans le temps avec une porteuse à une première fréquence et une porteuse à une deuxième fréquence au capteur d'OAS (10) par l'intermédiaire du dispositif d'activation (14), la première et la deuxième fréquence étant différentes, l'application étant adaptée de sorte que la première et la deuxième fréquence puissent être réglées de sorte qu'un déphasage, entraîné par suite d'un temps de passage dans le capteur d'OAS (10), d'une porteuse à la première fréquence d'un signal réfléchi reçu par le dispositif de réception (14) présente, par rapport à un déphasage, entraîné par suite d'un temps de passage dans le capteur d'OAS (10), d'une porteuse à la deuxième fréquence, un rapport de phase prédéterminé,

le dispositif de modulation I/Q étant adapté pour générer, pour la porteuse à la première fréquence du signal réfléchi, une première composante en phase et une première composante de quadrature et, pour la porteuse à la deuxième fréquence du signal réfléchi, une deuxième composante en phase et une deuxième composante de quadrature ; et

déterminer la non-idéalité du dispositif de modulation I/Q (300) sur base d'au moins l'une parmi la première composante en phase et la première composante de quadrature et d'au moins l'une parmi la deuxième composante en phase et la deuxième composante de quadrature.

27. Procédé pour étalonner un dispositif de modulation I/Q pouvant être couplé à un capteur d'OAS (10) présentant un réflecteur, un dispositif d'activation et un dispositif de réception, avec

déterminer une non-idéalité du dispositif de modulation I/Q selon la revendication 26; et

compenser la disparité I/Q, le décalage en phase et/ou le décalage de quadrature en fonction de la non-idéalité déterminée.

28. Programme d'ordinateur avec un code de programme pour la mise en oeuvre des procédés selon la revendication 24, 25, 26 ou 27 lorsque le programme d'ordinateur est exécuté sur un ordinateur.

# FIG 1

ANLEGEN EINES ZEITSIGNALS MIT EINEM TRÄGER EINES 1. FREQUENZ UND EINEM TRÄGER EINES 2. FREQUENZ AN DEN SAW-SENSOR —— 50

EMPFANGEN DES REFLEKTIERTEN SIGNALS —— 52

BESTIMMEN DER PHASENÄNDERUNG DES TRÄGERS DER 1.FREQUENZ UND DES TRÄGERS DER 2. FREQUENZ —— 54

BERECHNEN VON ABSTANDSINFORMATIONEN DES SAW-SENSORS —— 56

VERWENDEN DER ABSTANDSINFORMATIONEN ZUM EINSTELLEN EINER AUSWERTESCHALTUNG DES SAW-SENSORS —— 58

710 714 716A 712
716B 716C 716D

ID1 SAW-SENSOR

720 722

T+dT->MESSGRÖSSE: dT

724A 724B 724C 724D

SENDEPULS

0 $T_{REFF1}$ $T_{REFF2}$ $T_{REFF3}$ $T_{REFF4}$ t

730

$\varphi_1$ 736
734
$\varphi_4$

732

**FIG 10**

**FIG 2**

0 $d_1$ $d_2$ $d_3$ POSITION

12 10

14 16A 16B 16C

FIG 3

100

EP 1 481 230 B1

# FIG 4

ANLEGEN EINES ZEITSIGNALS MIT EINEM TRÄGER EINES 1. FREQUENZ UND EINEM TRÄGER EINES ZWEITEN FREQUENZ AN DEN SAW-SENSOR MIT DERARTIGER 1. UND 2. FREQUENZ, DASS ZWISCHEN DEN PHASENÄNDERUNGEN DES 1. UND DES 2. TRÄGERS AUFGRUND DER LAUFZEIT DURCH DEN SAW-SENSOR EINE VORBESTIMMTE PHASENBEZIEHUNG BESTELT

ERZEUGEN DER INPHASEN- UND QUADRATUR KOMPONENTE FÜR DEN TRÄGER DER 1. FREÖUENZ UND DEN TRÄGER DER 2. FREQUENZ DES REFLEKTIERTEN SIGNALS DURCH DEN I/Q- DEMODULATOR

BESTIMMEN EINER NICHTIDEALITÄT DES I/Q-DEMODULATORS BASIEREND AUF DEN I- UND Q- KOMPONENTEN

KALIBRIEREN DES I/Q-DEMODULATORS BASIEREND AUF DER BESTIMMTEN NICHTIDEALITÄT

FIG 5A

FIG 5B

FIG 6

FIG 7

FIG 8

STEUEREINRICHTUNG

90°

EP 1 481 230 B1

# FIG 9

| ANLEGEN EINES PULSES AN DEN SAW-SENSOR | 810 |

| EMPFANGEN DER ANTWORTPULSES | 812 |

| BESTIMMEN DER PHASENÄNDERUNG DER TRÄGER DER ANTWORTPULSES AUFGRUND DER LAUFZEIT IM SAW-SENSOR | 814 |

| BERECHNEN EINER MESSGRÖSSE BASIEREND AUF EINER DIFFERENZ DER PHASENÄNDERUNGEN | 816 |